(19)

**Europäisches Patentamt**
**European Patent Office**
**Office européen des brevets**

(11)  **EP 4 636 683 A1**

(12)  **EUROPEAN PATENT APPLICATION**

(43)  Date of publication:
   **22.10.2025  Bulletin 2025/43**

(21)  Application number: **24170714.0**

(22)  Date of filing: **17.04.2024**

(51)  International Patent Classification (IPC):
   **G06T 5/90** *(2024.01)*      **H04N 9/68** *(2023.01)*

(52)  Cooperative Patent Classification (CPC):
   **G06T 5/90; H04N 9/67; H04N 9/68; H04N 19/186;**
   H04N 19/30

(84)  Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **GE KH MA MD TN**

(71)  Applicant: **Koninklijke Philips N.V.**
   **5656 AG Eindhoven (NL)**

(72)  Inventor: **TICHELAAR, Johannes Yzebrand**
   **5656 AG Eindhoven (NL)**

(74)  Representative: **Philips Intellectual Property &**
   **Standards**
   **High Tech Campus 52**
   **5656 AG Eindhoven (NL)**

(54)  **IMPROVED LUMA AND CHROMA MAPPING FOR IMAGES**

(57)  To get an even more accurate luminance mapping usable for dynamic range conversion of images, the circuit and method of pixel color processing comprises: nd luma mapping using a luma mapping function (F_Ymap) an input luma into a non-linear output luminance (L'_out), or output luma; establishing a multiplier (m) for the input luma which depends on the input luma (Y_in), and multiplying an input blue and red chroma by the multiplier to obtain normalized chroma components (Cb_m, Cr_m), and clipping the normalized chroma components to a range between e.g. -0.5 and 0.5; transforming the clipped chroma components and a luma component which is equal to 1.0 into normalized red, green and blue components (R'_n, G'_n, B'_n) by using a color conversion matrix; multiplying the non-linear output luminance (L'_out), or output luma, by the normalized red, green and blue components (R'_n, G'_n, B'_n) to obtain scaled red, green and blue components (R'_a, G'_a, B'_a); wherein the luma mapping applies to the input luma a secondary luma mapping function (F_YmapC) which is based on the luma mapping function by applying a first calculation which equals:

$$F\_YmapC(Y\_in)=(F\_Ymap(Y\_in)+D)/(1+D),$$

wherein D is an offset value which is constant for the processing of at least one image;
wherein the multiplier is established as a multiplication of a first multiplier component which depends on the input luma by a second multiplier component which equals a reciprocal of a value which equals the sum of an output of the luma mapping function when having the input luma as input and the offset value (D);

performing a transformation of the scaled red, green and blue components (R'_a, G'_a, B'_a) into final red, green and blue components (R'_f, G'_f, B'_f) which depends on a second calculation which equals:
calculating a first result by subtracting from a respective one of the scaled red, green and blue color components a value which equals: the offset value divided by one plus the offset value;
calculating a second result being a maximum of zero and the first result; and multiplying this second result by one plus the offset value.

Fig. 5

**Description**

FIELD OF THE INVENTION

The invention relates to improved color processing typically usable for luminance dynamic range-adjustment, which allows changes between a first image having a first luminance dynamic and a second image of different second luminance dynamic range, whilst caring for good chromatic accuracy of the image pixel colors, which is in particular suitable for video communication systems such as television broadcast or video on demand, or optimization of images for a lesser or greater dynamic range than that of the received images.

BACKGROUND OF THE INVENTION

For more than half a century, an image representation/coding technology which is now called **Low Dynamic Range (LDR)** or **Standard Dynamic Range (SDR)** worked perfectly fine for creating, communicating and displaying electronic images such as videos (i.e. temporally successive sequences of images). Colorimetrically, i.e. regarding the specification of the pixel colors, it was based on the technology which already worked fine decades before for photographic materials and paintings: one merely needed to be able to define, and display, most of the colors projecting out of an axis of achromatic colors (a.k.a. greys) which spans from black at the bottom end to the brightest achromatic color giving the impression to the viewer of being white. For television communication, which relies on an additive color creation mechanism at the display side, a triplet of red, green and blue color components needed to be communicated for each position on the display screen (pixel), since with a suitably proportioned triplet (e.g. 60%, 30%, 25%) one can make almost all colors, and in practice all needed colors (white being obtained by driving the three display channels to their maximum, with driving signal Rmax=Gmax=Bmax). In LDR there would be nothing brighter than white, whereas in **High Dynamic Range** technology one has been researching various manners to define and finally display some pixel colors brighter than 100% white.

The earliest television standards (NTSC, PAL) communicated the color components as three voltage signals (which defined the amount of a color component between 0 and 700mV), where the time positions along the voltage signal corresponded by using a scan path with pixels on the screen.

The control signals generated at the creation side, directly instructed what the display should make as relative proportion (apart from their being an accidental fixed gamma pre-correction at the transmitter, because the physics of the cathode ray tube took approximately a square power of the input voltage, which would have made the dark colors much blacker than they were intended e.g. as seen by a camera) at the creation side). So a 60%, 30%, 25% color (which is a dark red) in the scene being captured, would look substantially similar on the display, since it would be re-generated as a 60%, 30%, 25% color (note that the absolute brightness didn't matter much, since the eye of the viewer would adapt to the white and the average brightness of the colors being displayed on the screen). One can call this "direct link driving", without further color processing (except for arbitrary and unnecessary processing a display maker might still perform to e.g. make his sky look more blue-ish). For reasons of backwards compatibility with the older black and white television broadcasts, instead of actually communicating a red, green and blue voltage signal, a brightness signal and two color difference signals called chroma were transmitted (in current nomenclature the blue chroma Cb, and the red chroma Cr (excess redness in the color)). The relationship between RGB and YCbCr is an easy one, namely they can be calculated into each other by using a simple fixed 3x3 matrix (the coefficients of which depend on the emission spectra of the elected three primaries, and are standardized, i.e. also to be emulated electronically internally by LCDs which actually may have different optical characteristics, so that from image communication point of view all SDR displays are alike).

These voltage signals were later for digital television (MPEG-based et al.) digitized, as prescribed in standard Rec. 709, and one defined the various amounts of e.g. the brightness component with an 8 bit code word, 0 coding for the darkest color (i.e. black), and 255 for white. Note that coded video signals need not be compressed in all situations (although they oftentimes are). In case they are we will use the wording compression (e.g. by MPEG-HEVC, AV1 etc.), not to be confused with the act of compressing colors in a smaller gamut respectively range. By brightness we mean the part of the color definition that will impact upon the colors (to be, or when) displayed the visual property of being darker respectively brighter. In the light of the present technologies, it is important to correctly understand that there can be two kinds of brightnesses: relative brightness (as a percentage of something, which may be undefined until a choice is made, e.g. by the consumer buying a certain display, and setting its brightness setting to e.g. 120%, which will make e.g. the backlight emit a certain amount of light, and so also the white and colored pixels), and on the other hand absolute brightness. The latter can be characterized by the universal physical quantity luminance (which is measured technically in the unit nit, which is also candela per square meter). The luminance can be stated as an amount of photons coming out of a patch on an object, such as a pixel on the screen, towards the eye (and it is related to the lighting concept of illuminance, since such patch will receive a certain illuminance, and send some fraction of it towards the viewer).

Recently two unrelated technologies have emerged, which only came together because people argued that one might as well in one go improve the visual quality of images on all aspects, but those two technologies have quite different technical aspects.

On the one hand there was a strive towards wide gamut image technology. It can be shown that only colors can be made which lie within the triangle spanned by the red, green and blue primaries, and nothing outside. But one chose (EBU, also re-standardized in Rec. 709) primaries (originally phosphors for the CRT, later color filters in the LCD, etc.) which lay relatively close to the spectral locus of all existing colors, so one could make sufficiently saturated colors for most purposes. Saturation specifies how far away a color lies from the achromatic (colorless) colors, i.e. how much "color" there is. However, recently one wanted to be able to use novel displays with more saturated primaries (e.g. DCI_P3, or Rec. 2020), so that one also needed to be able to represent colors in such wider color spaces. A color space is the mathematical 3D space to represent colors (defining geometric positions of colors by coordinate numbers, e.g. a red, green and blue value of the weighed combination of primary intensities in the produced total color), often presented in such a shape that the base is defined by the triangle of 3 primaries. Color model refers to the election of the categories of numerical values one uses to define the space, e.g. red, green and blue being a natural representation for specifying additive color generators, yet the same colors can be defined by three other coordinate ranges in the Hue, Saturation, and Value model, which model characterizes the colors in a more human-related manner. For the technical discussion we may better use the word color gamut, which is the set of all colors that can be technically defined or displayed (i.e. a space may be e.g. a 3D coordinate system going to infinity whereas the gamut may be a cube or tent-shape of some size in that space). For the brightness aspect only, we will talk about brightness or luminance range (more commonly worded as "dynamic range", spanning from some minimum brightness to its maximum brightness). The present technologies will not primarily be about chromatic (i.e. color per se, such as more specifically its saturation) aspects, but rather about brightness aspects, so the chromatic aspects will only be mentioned to the extent needed for the relevant embodiments.

A more important new technology is **High Dynamic Range (HDR).** This should not be construed as necessarily "exactly this high" (since there can be many variants of HDR representations, with successively higher range maximum), but rather as "higher than the reference/legacy representation: SDR". Since there are new coding concepts needed, one may also discriminate HDR from SDR by aspects of the technical details of the representation, e.g. the video signal. One difference of absolute HDR systems is that they define a unique luminance for each image pixel (e.g. a pixel in an image object being a white dog in the sun may be 550 nit), where SDR signals only had relative brightness definitions (so the dog would happen look e.g. 75 nit (corresponding to 94%) on somebody's computer monitor which could maximally show 80 nit, but it would display at 234 nit on a 250 nit SDR display (yet the viewer would not typically see any difference in the look of the image, unless having those displays side by side). I.e., whichever actual manner of coding the HDR image coder applies (e.g. as regards the format of the pixel color triplets, an RGB representation or alternatively a Y'CbCr representation), absolute HDR image or video coding allows the receiving side to state a definite luminance value for each pixel of the received image, whereas the relative systems cannot (when receiving relative images decoders can decide to display the pixel at some "arbitrary" luminance, but cannot decode an agreed luminance from the encoder). I.e. the reader should not confuse luminances as they exist (ultimately) at the front of any display, upon the act of displaying the image, with luminances as are defined (i.e. establishable) on an image signal itself, i.e. even when that is stored but not displayed. Other differences are metadata that any flavor of HDR signal may have, but not the SDR signal. I.e. the coding of the signal will also indicate differences with SDR. And, ultimately there would be a chain of all-HDR apparatuses: an apparatus (e.g. camera) for generating HDR (i.e. e.g. > 10,000:1) images, an HDR video communication system, and an HDR end-user display to see the images (and anything additional in between, like e.g. grading software, should also be HDR-capable).

Colorimetrically, HDR images can represent brighter colors than SDR images, so in particular brighter than (Lambertian reflecting) white colors (glowing whites e.g.). Or in other words, the dynamic range will be larger. The SDR signal can represent a dynamic range of 1000: 1 (how much dynamic range is actual visible when displaying, will depend inter alia on the amount of surround light reflecting on the front of the display). Typically that SDR luminance range may display between (approximately) 0.1 nit minimum well-visible black and (approximately) 100 nit white (minor variations in displaying won't matter much to the viewer). An image as encoded and communicated will typically be at least as good or better than a typical viewing scenario demands.

Now if one wants to represent e.g. 10,000:1, one must resort to making a new HDR image format definition (we may in general use the word signal if the image representation is being or to be communicated rather than e.g. merely existing in the creating IC, and in general signaling will also have its own formatting and packaging, and may employ further techniques depending on the communication mechanism such as modulation).

Depending on the situation, the human eye can easily see (even if all on a screen in front corresponding to a small glare angle) 100,000: 1 (e.g. 10,000 nit maximum and 0.1 minimum, which is a good black for television home viewing, i.e. in a dim room which only support lighting of a relatively low level, such as in the evening). If a dynamic range is characterized only by a maximum luminance (ML), it is based on a fixed reference minimum black (MB) luminance, e.g. 0.1 nit. However, it is not necessary that all images as created by a creative go as high: (s)he may elect to make the brightest image pixel in an image or the video e.g. 1000 nit.

The luminance of SDR white for videos (a.k.a. the SDR White Point Luminance (WPL) or maximum luminance (ML)), is standardized to be 100 nit (not to be confused with the reference luminance of white text in 1000 nit HDR images being typically 200 nit, i.e. a Lambertian white level in typical HDR images). I.e., a 1000 nit ML HDR image representation can make up to 10x brighter (glowing) object colors than an absolute SDR image. What one can content-wise, i.e. image object-wise, make with this are e.g. specular reflections on metals, such as a boundary of a metal window frame: in SDR the luminance has to end at 100 nit, making them visually on slightly brighter than the e.g. 70 nit light gray colors of the part of the window frame that does not specularly reflect. In HDR one can make those pixels that reflect the light source to the eye e.g. 900 nit, making them glow nicely giving a naturalistic look to the image as if it were a real scene. The same can be done with fireballs, light bulbs of a Christmas decoration in a garden, etc. This regards the definition of images; how a display which can only display whites as bright as 650 nit (the display maximum luminance ML_D rather than the video or content maximum luminance ML_C) is to actually display the images is an entirely different matter, namely one of **display adaptation a.k.a. display tuning,** not a matter of image (de)coding. However, the display will usually try to display as close as possible to the ideal displaying as far as the display capabilities allow (e.g. darker pixel luminances of an image may be displayed equi-luminance i.e. with the luminances as coded in the received image). Also the relationship with how a camera captures HDR scene colors may be tight or loose: we will in general assume that HDR colors have already been defined in the HDR image when talking about such technologies as coding, communication, dynamic range conversion and the like. In fact, the original camera-captured colors or specifically their luminances may have been changed into different values by e.g. a human color grader (who defines the ultimate look of an image, i.e. which color triplet values each pixel color of the image(s) should have), or some automatic algorithm. In fact, cameras normally don't even capture actual luminances, but linear brightness proportions. So we are typically talking about the coding of an HDR image grading, the brightnesses or luminances of that image, and the dynamic range of that image (per se, i.e. as it should ideally be displayed, on any display that has a capability to display the minimum and maximum luminance as prescribed in the image). If a color grader (human or automatic) considers in that image a 4000 nit sun disk pixel to be bright enough, it is for the majority of the technical discussions (apart from when they e.g. specifically deal with camera technologies) irrelevant what number the camera captured for the sun disk, let alone the original luminance of the sun in the captured scene. As regards the chromatic aspects, of wide gamut image technology, already for the fact that the chromatic gamut size may stretch with less than a factor 2, whereas the brightness range e.g. luminance range may stretch by a factor 100, one expects different technical rationales and solutions for the two improvement technologies. So we are mainly dealing with the height of the 3D gamut (or in a cube the diagonal distance from the zero vertex), on which vertical axis of achromatic greys we can locate the range of all luminances, e.g. all luminances codeable, or present in an image.

A HDR image may be associated with a metadatum called mastering display white point luminance (MDWPL), a.k.a. video-related maximum luminance ML_V. This value, which is typically communicated in metadata of the signal, and is a characterizer of the HDR video images (rather than of a specific display, as it is an element of a virtual display associated specifically with the video, being some ideal intended display for which the video pixel colors have been optimized to be conforming). This is an electable parameter of the video, which can be contemplated as similar to the election of the painting canvas aspect ratio by a painter: first the painter chooses an appropriate AR, e.g. 4:1 for painting a landscape, or 1:1 when he wants to make a still life, and thereafter he starts to optimally position all his objects in that elected painting canvas. In an HDR image the creator will then, after having established that the MDWPL is e.g. 5000 nit, make his secondary elections that in a specific scene this lamp shade should be at 700 nit, the flames in the hearth distributed around 500 nit, etc.

The primary visual aspect of HDR images is (since the blacks are more tricky) the additional bright colors (so one can define ranges with only a MDWPL value, if one assumes the bottom luminance to be fixed to e.g. 0.1 nit). However, HDR image creation can also involve deeper blacks, up to as deep as e.g. 0.0001 nit (although that is mostly relevant for dark viewing environments, such as in cinema theatres).

The other objects, e.g. the objects which merely reflect the scene light, will be coordinated to be e.g. at least 40x darker in a 5000 nit MDWPL graded video, and e.g. at least 20x darker in a 2000 nit video, etc. So the distribution of all image pixel luminances will typically depend on the MDWPL value (not making most of the pixels very bright).

The digital coding of the brightness, involves a technical quantity called **luma** (Y). We will give luminances the letter L, and (relative) brightnesses the letter B. Note that technically, e.g. for ease of definition of some operations, one can always normalize even 5000 nit WPDPL range luminances to the normalized range [0,1], but that doesn't detract from the fact that these normalized luminances still represent absolute luminances on a range ending at 5000 nit (in contrast to relative brightnesses that never had any clear associated absolute luminance value, and can only be converted to luminances ad hoc, typically with some arbitrary value).

For SDR signals the luma coding used a so-called Opto-electronic Transfer Function (OETF), between the optical brightnesses and the electronic typically 8 bit luma codes which (approximately) by definition was:

$$Y\_float = sqrt\ (B\_relative).$$

If B_relative is a float number ranging from 0 to 1.0, so will Y_float.

Subsequently that signal value Y_float is quantized, because we want 8 bit digital representations, ergo, the Y_dig value that is communicated to receivers over e.g. airways DVB (or internet-supplied video on demand, or blu-ray disk, etc.) has a value between 0 and 255 (i.e. power(2;8)-1).

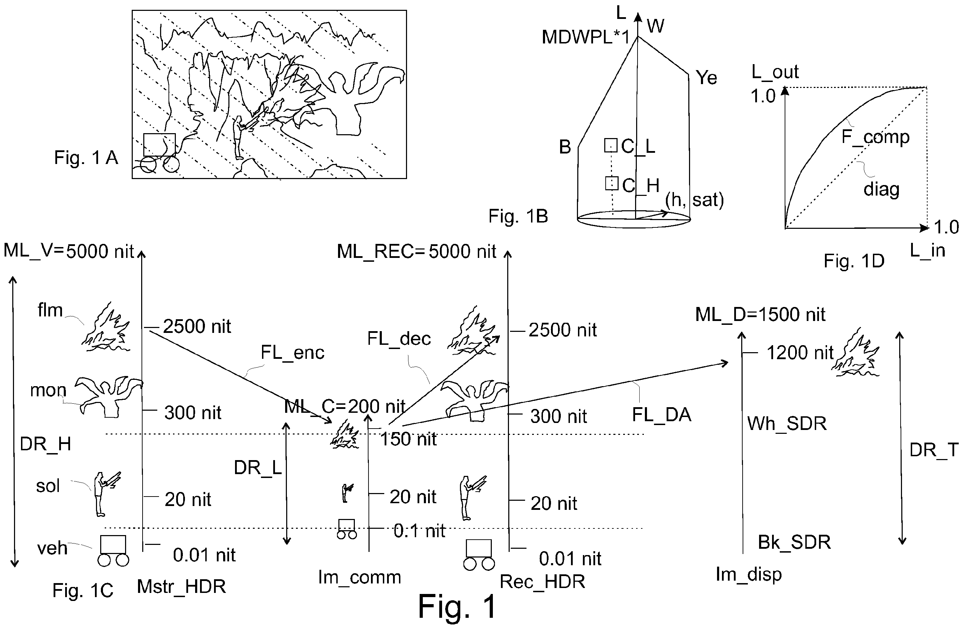

One can show the gamut of all SDR colors (or similarly one can show gamuts of HDR colors, which would if using the same RGB primaries defining the chromatic gamut have the same base, but after renormalization stretch vertically to a larger absolute gamut solid) as in Fig. 1B. Larger Cb and Cr values will lead to a (psychovisually more relevant color characterizer) larger saturation (sat), which moves outwards from the unsaturated or colorless colors vertical axis showing the achromatic colors in the middle, towards the maximally saturated colors on the circle (which is a transformation of the usual color triangle spanned by the RGB primaries as vertices). Hues h (i.e. the color category, yellows, versus greens, versus blues) will be angles along the circle. The vertical axis represents normalized luminances (in a linear gamut representation), or normalized lumas (in a non-linear representation (coding) of those luminances, e.g via a psychovisually uniformized OETF or its inverse the EOTF). Since after normalization (i.e. division by the respective MDWPL values, e.g. 2000 for an HDR image of a particular video and 100 for an SDR image), the common representation will become easy, and one can define luminance (or luma) mapping functions on normalized axes as shown in Fig. 1D (i.e. which function F_comp re-distributes the various image object pixel values as needed, so that in the actual luminance representation e.g. a dark object looks the same, i.e. has the same luminance, but a different normalized luminance since in one situation a pixel normalized luminance will get multiplied by 100 and in the other situation by 2000, so to get the same end luminance the latter pixel should have a normalized luminance of $1/20^{th}$ of the former). When down-grading to a smaller range of luminances, one will typically get (in the normalized to 1.0 representation, i.e. mapping a range of normalized input luminances L_in between zero and one to normalized output luminances L_out) a compressive function (typically having a smaller than 45 degree angle for the brighter colors at least when shown in a luminance-luminance plot) which everywhere lies above the diagonal diag, but the exact shape of that function F_comp, e.g. how fact it has to rise at the blacks, will depend typically not only on the two MDWPL values, but (to have the most perfect re-grading technology version) also on the scene contents of various (video or still) images, e.g. whether the scene is a dark cave, and there is action happening in a shadowy area, which must still be reasonably visible even on 100 nit luminance ranges (hence the strong boost of the blacks for such a scenario, compared to a daylight scene which may employ a near linear function almost overlapping with the diagonal). Such a function may be called a concave function, when using the mathematical definition according to the concaveness of the hypograph. If the luminance re-grading has to go in the opposite direction, i.e. up-grading from a lower dynamic range image to a higher dynamic range image, a convex function will be used (using the mathematical definition that any line connecting two distinct points of the function, i.e. its locus of points, will lie above the function).

In the representation of Fig. 1B one can show the mapping from a HDR color (C_H) to an LDR color (C_L) of a pixel as a vertical shift (assuming that both colors should have the same proper color, i.e. hue and saturation, which usually is the desired technical requirement, i.e. on the circular ground plane they will project to the same point). Ye means the color yellow, and its complementary color on the opposite side of the achromatic axis of luminances (or lumas) is blue (B), and W signifies white (the brightest color in the gamut a.k.a. the white point of the gamut, with the darkest colors, the blacks being at the bottom).

So the receiving side (in the old days, or today) will know it has an SDR video, if it gets this format. The maximum white (of SDR) will be by definition the brightest color that SDR can define. So if one now wants to make brighter image colors (e.g of real luminous lamps), that should be done with a different codec (as one can show the math of the Rec. 709 OETF allows only a coding of up to 1000: 1 and no more).

So one defined new frameworks with different code allocation functions (EOTFs, or OETFs). What is of interest here is primarily the definition of the luma codes.

For reasons beyond what is needed for the present discussion, most HDR codecs start by defining an Electro-optical transfer function instead of its inverse, the OETF. Then one can at least basically define brighter (and darker) colors. That as such is not enough for a professional HDR coding system, since because it is different from SDR, and there are even various flavors, one wants more (new compared to SDR coding) technical information relating to the HDR images, which will be metadata.

The property of those HDR EOTFs is that they are much steeper, to encode a much larger range of needed to be coded HDR luminances, and a significant part of that range coding specifically darker colors (relatively darker, since although one may be coding absolute luminances with e.g. the Perceptual Quantizer (PQ) EOTF (standardized in SMPTE 2084), one applies the function after normalization). In fact if one were to use exact power functions as EOTFs for coding HDR luminances as HDR lumas, one would have a power of 4, or even 7. When a receiver gets a video image signal defined by such an EOTF (e.g. Perceptual Quantizer) it will know it gets a HDR video. It will need the EOTF to be able to decode the pixel lumas in the plane of lumas spanning the image (i.e. having a width of e.g. 4000 pixels and a height of 2000), which will simply be binary numbers. Typically HDR images will also have a larger word length, e.g. 10 bit. However, one should not confuse the non-linear coding one can at will design by optimizing a non-linear EOTF shape with linear codings and the amount of bits needed for them. If one needs to drive, with a linear (bit-represented) code, e.g. a DMD pixel, indeed to reach e.g. 10000:1 modulation darkest to brightest, one needs to take the log2 to obtain the number of bits. There one would need to have at least 14 bits (which may for technical reasons get rounded upwards to 16 bits), since power(2;14)= 16384 > 10000. But being able to smartly design the shape of the EOTF, and knowing that the visual system sees not all luminance differences equally, the present applicant has shown that (surprisingly) quite reasonable HDR television signals can be communicated with only 8 bit per pixel color component (of course if technically achievable in a system, 10 bits may be better and more preferable). So the receiving side may in both situations get as input a coded pixel color (luma and Cb, Cr; or in some systems by matrixing equivalent non-linear R'G'B' component values) which lie between 0 and 255, or 0 and 1023, but it will know the kind of signal it is getting (hence what ought to be displayed) from the metadata, such as the metadata (e.g. MPEG VUI metadata) co-communicated EOTF (e.g. a value 16 meaning PQ; 18 means another OETF was used to create the lumas, namely the Hybrid LogGamma OETF, ergo the inverse of that function should be used to decode the luma plane), in many HDR codings the MDWPL value (e.g. 2000 nit), and in more advanced HDR codings further metadata (some may e.g. co-encode luminance -or luma- mapping functions to apply for mapping image luminances from a primary luminance dynamic range to a secondary luminance dynamic range, such as one function FL_enc per image).

We detail the typical needs of an already more sophisticated HDR image handling chain with the aid of simple elucidation **Fig. 1** (for a typical nice HDR scene image, of a monster being fought in a cave with a flame thrower, the **master grading** (Mstr_HDR) of which is shown spatially in Fig. 1A, and the range of occurring pixel luminances on the left of Fig. 1C). The master grading or master graded image is where the image creator can make his image look as impressive (e.g. realistic) as desired. E.g., in a Christmas movie he can make a baker's shop window look somewhat illuminated by making the yellow walls somewhat brighter than paper white, e.g. 150 nit (and real colorful yellow instead of pale yellow), and the light bulbs can be made 900 nit (which will give a really lit Christmas-like look to the image, instead of a dull one in which all lights are clipped white, and not much more bright than the rest of the image objects, such as the green of the Christmas tree). In general all aspects of the look, be they dark colors, or fine gradients, etc., can be tuned as desired, in principle, or at least as visually reasonable (e.g. an image that is signed off as being okay by somebody working as or for the creator). When somebody in the video is wearing a white shirt, the master grader (especially when a human, or at least a smart algorithm) can make the lit parts of the shirt realistically brighter than the shadowy parts (which should still look white), either as percentages or nits, rather than that a dumb algorithm that would make the unlit whites e.g. 90 nit and the lit ones 1000 nit, which would look visually unrealistic. Also down-converted gradings where e.g. the brown color of a sunlit part of a wooden object is bleached away may be less preferable than a bright color which still has some brown in it. So at least for some usage scenarios the specifics of the various gradings of the object luminances and colors may be relatively critical, and hence the various technologies handling such images must be able to reasonably cope with those technical desiderata.

So the basic thing one must be able to do is encode (and typically also decode and display) brighter image objects than in a typical SDR image.

Let's look at it colorimetrically now. SDR (and its coding and signaling) was designed to be able to communicate any Lambertian reflecting color (i.e. a typical object, like your blue jeans pants, which absorbs some of the infalling light, e.g. the red and green wavelengths, to emit only blue light to the viewer or capturing camera) under good uniform lighting (of the scene where the action is camera-captured). Just like we would do on a painting: if we don't add paint we get the full brightness reflecting back from the white painting canvas, and if we add a thick layer of strongly absorbing paint we will see a black stroke or dot. We can represent all colors brighter than blackest black and darker than white in a so-called color gamut of representable colors, as in Fig. 1B (the "tent"). As a bottom plane, we have a circle of all representable chromaticities (note that one can have long discussions that in a typical RGB system this should be a triangle, but those details are beyond the needs of the present teachings). A chromaticity is composed of a certain (rotation angle) hue h (e.g. bluish-green e.g. "teal"), and a saturation sat, which is the amount of pure color mixed in a grey, e.g. the distance from the vertical axis in the middle which represents all achromatic colors from black at the bottom becoming increasingly bright till we arrive at white. Chromatic colors, e.g. a half-saturated purple, can also have a brightness, the same color being somewhat darker or brighter. However, the brightest color in an additive system can only be (colorless) white, since it is made by setting all color channels to maximum R=G=B=255, ergo, there is no unbalance which would make the color clearly red (there is still a little bit of bluishness respectively yellowishness in the elected white point chromaticity, but that is also an unnecessary further discussion, we will assume D65 daylight white). We can define those SDR colors by setting MDWPL a (relative) 100% for white W (n.b., in legacy SDR white does not actually have a luminance, since legacy SDR does not have a luminance associated with the image, but we can pretend it to be X nit, e.g. typically 100 nit, which is good average representative value of the various legacy SDR tv's).

Now we want to represent brighter than Lambertian colors, e.g. the self-luminous flame object (flm) of the flame thrower of the soldier (sol) fighting the monster (mon) in this dark cave.

Let's say we define a (video maximum luminance ML_V) 5000 nit master HDR grading (master means the starting image -most important in this case best quality grading- which we will optimally grade first, to define the look of this HDR scene image, and from which we can derive secondary gradings a.k.a. graded images as needed). We will for simplicity talk about what happens to (universal) luminances, then we can for now leave the debate about the corresponding luma codes out of the discussion, and indeed PQ can code between 1/10,000 nit and 10,000 nit, so there is no problem communicating those graded pixel luminances as a e.g. 10 bit per component YCbCr pixelized HDR image, if coding according to that PQ EOTF (of course, the mappings can also be represented, and e.g. implemented in the processing IC units, as an equivalent luma mapping).

The two dotted horizontal lines represent the limitations of the SDR codable image, when associating 100 nit with the 100% of SDR white.

Although in a cave, the monster will be strongly illuminated by the light of the flames, so we will give it an (average) luminance of 300 nit (with some spread, due to the square power law of light dimming, skin texture, etc.).

The soldier may be 20 nit, since that is a nicely slightly dark value, still giving some good basic visibility.

A vehicle (veh) may be hidden in some shadowy corner, and therefore in an archetypical good impact HDR scene of a cave e.g. have a luminance of 0.01 nit. The flames one may want to make impressively bright (though not too exaggerated). On an available 5000 nit HDR range, we could elect 2500 nit, around which we could still gradually make some darker and brighter parts, but all nicely colorful (yellow and maybe some oranges).

What would now happen in a typical SDR representation, e.g. a straight from camera SDR image capturing?

The camera operator would open his iris so that the soldier comes out at "20 nit", or in fact more precisely 20%. Since the flames are much brighter (note: we didn't actually show the real-world scene luminances, since master HDR video Mstr_HDR is already an optimal grading to have best impact in a typical living room viewing scenario, but also in the real world the flames would be quite brighter than the soldier, and certainly the vehicle), they would all clip to maximum white. So we would see a bright area, without any details, and also not yellow, since yellow must have a lower luminance (of course the cinematographer may optimize things so that there is still somewhat of a flame visible even in LDR, but then that is firstly never as impactful extra bright, and secondly at the detriment of the other objects which must become darker).

The same would also happen if we built an SDR (max. 100 nit) TV which would map equi-luminance, i.e. it would accurately represent all luminances of the master HDR grading it can represent, but clip all brighter object pixel luminances to 100 nit white.

So the usual paradigm in the LDR era was to relatively map, i.e. the brightest brightness (here luminance) of the received image to the maximum capability of the display ("white-on-white", which in the previous century would happen automatically due to the electronic driving of the display). In this manner, e.g. a white bridal gown would look nicely white on the LDR display.

As such a white-on-white approach when used for novel HDR images would map 5000 nit by division by 50 on 100 nit, the flames would still be okay since they are spread as yellows and oranges around 50 nit (which is a brightness representable for a yellow, since as we see in Fig. 1B the gamut tent for yellows goes down in luminance only a little bit when going towards the most saturated yellows, in contrast to blues (B) on the other side of the slice for this hue angle B-Ye, which blues can only be made in relatively dark versions). However, this would be at the detriment of everything else becoming quite dark, e.g. the soldier 20/50 nit which is pure black (and this is typically a problem that we see in SDR renderings of such kinds of movie scene). Some more advanced approach would be preferable.

So, if having established a good HDR maximum luminance (i.e. ML_V) for the master grading, and a good EOTF e.g. PQ for coding it, we can in principle start communicating HDR images to receivers, e.g. consumer television displays, computers, cinema projectors, etc.

But that is only the most basic system of HDR.

The problem is that, unless the receiving side has a display which can display pixels at least as bright as 5000 nit, there is still a question of how to display those pixels.

Some (DR adaptation) luminance down-mapping must be performed in the TV, to make darker pixels which are displayable. E.g. if the display has a (end-user) **display maximum luminance ML_D** of 1500 nit, one could somehow try to calculate 1200 nit yellow pixels for the flame (potentially with errors, like some discoloration, e.g. changing the oranges into yellows).

This luminance down-mapping is not really an easy task, especially to do very accurately instead of sufficiently well, and therefore various technologies have been invented (also for the not necessarily similar task of luminance up-mapping, to create an output image of larger dynamic range and in particular maximum luminance than the input image).

Typically one wants a mapping function (generically, i.e. used for simplicity of elucidation) of a concave shape in a normalized luminance (or brightness) plot, as shown in Fig. 1D. Both input and output luminances are defined here on a range normalized to a maximum equaling one, but one must mind that on the input axis this one corresponds to e.g. 5000 nit, and on the output axis e.g. 200 nit (which to and fro can be easily implemented by division respectfully multiplication). In such a normalized representation the darkest colors will typically be too dark for the grading with the lower dynamic range of the two images (here for down-conversion shown on the vertical output axis, of normalized output luminances L_out, the horizontal axis showing all possible normalized input luminances L_in). Ergo, to have a satisfactory output image corresponding to the input image, we must relatively boost those darkest luminances, e.g. by multiplying by 3x, which is the slope of this luminance compression function F_comp for its darkest end. But one cannot boost forever if one wants no colors to be clipped to maximum output, ergo, the curve must get an increasingly lower slope for brighter input luminances, e.g. it may typically map input 1.0 to output 1.0. In any case the luminance compression function F_comp for down-grading will lie above the 45 degree diagonal (diag) typically.

Care must still be taken to do this correctly. E.g., some people like to apply three such compressive functions to the three red, green and blue color channels separately. Whilst this is a nice and easy guarantee that all colors will fit in the output gamut (an RGB cube, which in chromaticity-luminance (L) view becomes the tent of Fig. 1B) especially with higher non-linearities it can lead to significant color errors. A e.g. reddish orange hue is determined by the percentage of red and green, e.g. 30% green and 70% red. If the 30% now gets doubled by the mapping function, but the red stays in the feeble-sloped part of the mapping function almost unchanged, we will have a 60/70, i.e. 50/50 i.e. a yellow instead of an orange. This can be particularly annoying if it depends on (in contrast to the SDR paradigm) non-uniform scene lighting, e.g. a sports car entering the shadows suddenly turning yellow.

Ergo, whilst the general desired shape for the brightening of the colors may still be the function F_comp (e.g. determined by the video creator, when grading a secondary image corresponding to his master HDR image already optimally graded), one wants a more savvy down-mapping. As shown in Fig. 1B, for many scenarios one may desire a re-grading which merely changes the brightness of the normalized luminance component (L), but now the innate type of color, i.e. its chromaticity (hue and saturation). If both SDR and HDR are represented with the same red, green and blue color primaries, they will have a similarly shaped gamut tent, only one being higher than the other in absolute luminance representation. If one scales both gamuts with their respective MDWPL values (e.g. MDWPL1= 100 nit, and MDWPL2= 5000 nit), both gamuts will exactly overlap. The desired mapping from a HDR color C_H to a corresponding output SDR color C_L (or vice versa) will simply be a vertical shifting, whilst the projection on the chromaticity plane circle (i.e. the proper color of the pixel being its hue and its saturation) stays the same.

If it is now possible to down-grade with one (or more) luminance mapping functions (the shape of which may be optimized by the creator of the video(s)), in case one uses invertible functions one can design a more advanced HDR codec.

Instead of just making some final secondary grading from the master image, e.g. in a television, one can make a lower dynamic range image version for communication, **communication** image **Im_comm**. We have elected in the example this image to be defined with its communication image maximum luminance ML_C equal to 200 nit. The original 5000 nit image can then be reconstructed (a.k.a. decoded) as a reconstructed image Rec_HDR (i.e. with the same reconstructed image maximum luminance ML_REC) by receivers, if they receive in metadata the decoding luminance mapping function FL_dec, which is typically substantially the inverse of the coding luminance mapping function FL_enc, which was used by the encoder to map all pixel luminances of the master HDR image into corresponding lower pixel luminances of the communication image Im_comm. So the proxy image for actually communicating an image of a higher dynamic range (DR_H, e.g. spanning from 0.001 nit to 5000 nit) is an image of a different, lower dynamic range (DR_L).

Interestingly, one can even elect the communication image to be a 100 nit LDR (i.e. SDR) image, which is immediately ready (without further color processing) to be displayed on legacy LDR images (which is a great advantage, because legacy displays don't have HDR knowledge on board). How does that work? The legacy TV doesn't recognize the MDWPL metadatum (cos that didn't exist in the SDR video standard, so the TV is also not arranged to go look for it somewhere in the signal, e.g. in a Supplemental Enhancement Information message, which is MPEG's mechanism to introduce all kinds of pre-agreed new technical information). It is also not going to look for the function. It just looks at the YCbCr e.g. 1920x1080 pixel color array, and displays those colors as usual, i.e. according to the SDR Rec. 709 interpretation. And the creator has chosen in this particular codec embodiment his FL_enc function so that all colors, even the flame, map to reasonable colors on the limited SDR range. Note that, in contrast to a simple multiplicative change corresponding to the opening or shutting of a camera iris in an SDR production (which typically leads to clipping to at least one of white and/or black), now a very complicated optimal function shape can be elected, as long as it is invertible (e.g. we have taught systems with first a coarse pre-grading and then a fine-grading). E.g. one can move the luminance (respectively relative brightness) of the car to a level which is just barely visible in SDR, e.g. 1% deep black, whilst moving the flame to e.g. 90% (as long as everything stays invertible).

How do we now know that this is actually a HDR video signal, even if it contains an LDR-usable pixel color image, or in fact that any HDR-capable receiver can reconstruct it to HDR: because there are also the functions FL_dec in metadata, typically one per image. And hence that signal codes what is also colorimetrically, i.e. according to our above discussion and definition, a (5000 nit) HDR image.

Although already more complex than the basic system which communicates only a PQ-HDR image, this per SDR proxy coding is still not the best future-proof system, as it still leaves the receiving side to guess how to down-map the colors if it has e.g. a 1500 nit, or even a 550 nit, tv.

Therefore we added a further technical insight, and developed so-called display tuning technology (a.k.a. display adaptation): the image can be tuned for any possible connected tv, i.e. any ML_D, because one can double the function of the coding function FL_enc as some guidance function for the up-mapping from 100 nit Im_comm not to a 5000 nit reconstructed image, but to e.g. a 1500 nit image. The concave function, which is substantially the inverse of F_comp (note, for display tuning there is no requirement of exact inversion as there is for reconstruction), will now have to be scaled to be somewhat less steep (i.e. from the reference decoding function FL_dec a **display adapted** luminance mapping function FL DA will be calculated), since we expand to only 1500 nit instead of 5000 nit. I.e. an image of tertiary dynamic range (DR_T) can be calculated, e.g. optimized for a particular display in that the maximum luminance of that tertiary dynamic range is typically the same as the maximum displayable luminance of a particular display.

Techniques for display adaptation are described in WO2017108906 (we can transform a function of any shape into a similarly-shaped function which lies closer to the 45 degree diagonal, by an amount which depends on the ratio between the maximum luminances of the input image and the desired output image, versus the ratio of the maximum luminances of the input image and a reference image which would here be the reconstructed image, by e.g. using that ratio to obtain closer points on for all points on the diagonal orthogonally projecting a line segment from the respective diagonal point till it meets a point on the input function, which closer points together define the tuned output function, for calculating the to be displayed image Im_disp luminances from the Im_comm luminances).

Not only did we get more kinds of displays even for basic movie or television video content (LCD tv, mobile phone, home cinema projector, professional movie theatre digital projector), and more video different sources and communication media (satellite, streaming over the internet, e.g. OTT, streaming over 5G), but also did we get more production manners of video. In the future it is even expected that such applications as virtual reality may become more commonplace (in which the video information may be communicated as image-defining or 3D environment-defining assets rather than typical MPEG data), but e.g. when watching a video or game with a vizor, HDR techniques like the present will still be important, if not even more important when having more realistic image environments close to the eyes.

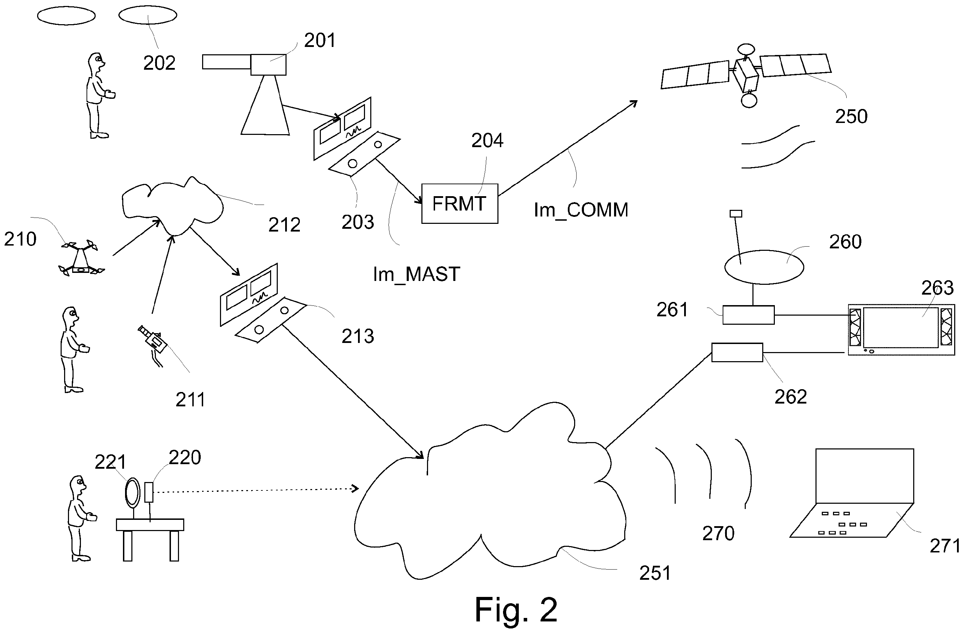

**Fig. 2** shows -in general, without desiring to be limiting- a few typical creation and communication scenarios of video wherein the present teachings may be usefully deployed. We merely elucidate the possible uses by examples, and in actual systems further components may be present such as aggregators, or re-distributors (which might apply transcoding), which may collect various life or prepared content.

In a studio environment, e.g. for the news or a comedy, there may still be a tightly controlled shooting environment (although HDR allows relaxation of this, and shooting in real environments). There will be controlled lighting (202), e.g. a battery of base lights on the ceiling, and various spotlights. There will be a number of bulky relatively stationary television cameras (201). Variations on this often real-time broadcast will be e.g. a sports show like soccer, which will have various types of cameras like near-the-goal cameras for a local view, overview cameras, drones, etc. In a biking competition cameras may be traveling on motorcycles and driving into dark tunnels etc.

There will be some production environment 203, in which the various feeds from the cameras can be selected to become the final feed, and various (typically simple, but potentially more complex) grading decisions can be taken. In the past this often happened in e.g. a production truck, which had many displays and various operators, but with internet-based workflows, where the raw feeds can travel via some network, the final composition may happen at the premises of the broadcaster. Finally, when simplifying the production for this elucidation, some coding and formatting for broadcast distribution to end (or intermediate, such as local cable stations) customers will happen in formatter 204. This will typically do the conversion to e.g. PQ YCbCr from the luminances as graded as explained with Fig. 1, for e.g. an intermediate dynamic range format, calculate and format all the needed metadata, convert to some broadcasting format like DVB or ATSC, packetize in chunks for distribution, etc. (the etc. indicating there may be tables added for signaling available content, sub-titling, encryption, but at least some of that will be of lesser interest to understand the details of the present technical innovations).

Typically, there will be a final product image (e.g. correctly brightness and color graded, for consumption in typical viewing scenarios), which is the master image Im_MAST. It may be that this master image itself is sent to any receiver, e.g. an end-consumer television display. But oftentimes colorimetrically and/or as regards signal format or definition, a different representative image or video is sent, the communication image Im_COMM. E.g. some backwards compatible systems, for broadcasters which still have many customers with legacy SDR televisions, may calculate an SDR proxy communication image(s) representing the master HDR image(s). These images will then be associatable with, usually co-communicated, brightness mapping function metadata, so that the receiving side can create higher dynamic range images again, e.g. reconstruct a close approximation (except for e.g. some minor quantization or compression artefacts) of the original master images.

In the example the video (a television broadcast in the example) is communicated via a television satellite 250 to a satellite dish 260 and a satellite signal capable set-top-box 261. Finally it will be displayed on an end-user display 263.

This display may be showing this first video, but it may also show other video feed, potentially even at the same time, e.g. in Picture-in-Picture windows (or some data of the first HDR video program may come via some distribution mechanism and other data via another).

A second production is typically an off-line production. We can think of a Hollywood movie, but it can also be a show of somebody having a race through a jungle. Such a production may be shot with other optimal cameras, e.g. steadicam 211 and drone 210. We again assume that the camera feeds (which may be raw, or already converted to some HDR production format like HLG) are stored somewhere on network 212, for later processing. In such a production we may in the last months of production have some human color grader use grading equipment 213 to determine the optimal luminances (or relative brightnesses in case of HLG production and coding) of the master grading. Then the video may be uploaded to some internet-based video service 251. For professional video distribution this may be e.g. Netflix.

A third example is consumer video production. Here the user will have e.g. when making a vlog a ring lighter 221, and will capture via a mobile phone 220, but (s)he may also be capturing in some exterior location without supplementary lighting. She/he will typically also upload to the internet, but now maybe to youtube, or tiktok, etc.

In case of reception via the internet, the display 263 will be connected via a modem, or router 262 or the like (more complicated setups like in-house wifi and the like are not shown in this mere elucidation).

Another user may be viewing the video content on a portable display (271), such as a laptop (or similarly other users may use a non-portable desktop PC), or a mobile phone etc. They may access the content over a wireless connection (270), such as Wifi, 5G, etc.

Current professional reference displays for viewing created video can go as high as ML_D = 10,000 nit. Even in the consumer arena, recently a 10,000 nit television has been demonstrated. So, if things evolve beneficially, we may see high quality HDR imagery being commonplace in various applications on not too long term. Note that cameras don't actually capture exact luminances, but rather relative brightnesses of a scene (due to the arbitrary selection of iris etc.), however, they have no problem capturing high dynamic ranges nowadays. Even standard cameras can at least faithfully capture 14 powers of two of differential brightness in a scene, and more advanced cameras with specialized sensor construction, or techniques such as multiple exposure can go well beyond this (e.g. 20 powers of two, which is a quite reasonable capturing dynamic range for most situations).

So it can be seen that today, various kinds of video, in various technical codings, can be generated and communicated in various manners, and our coding and processing systems have been designed to handle substantially all those variants.

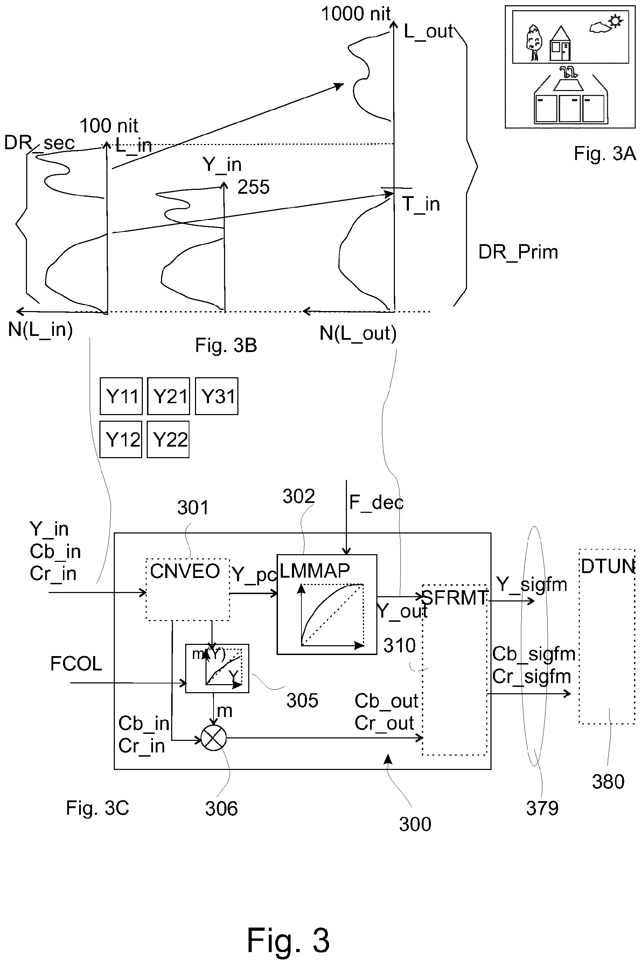

**Fig. 3** shows an example of an absolute (nit-level-defined) dynamic range conversion circuit 300 for a (HDR) image or video decoder downgrading from a higher dynamic range video input (when the communicated proxy image is a lower dynamic range image, the encoder will typically work similarly but with inverted functions typically, i.e. the function to be applied being the function of the other side mirrored over the diagonal). This is shown in a larger video processing chain in Fig. 3C, which also may contain further luminance range optimization (circuit 380). It is based on coding a primary image (e.g. a master HDR grading) with a primary luminance dynamic range (DR_Prim) as another (so-called proxy) image with a different secondary range of pixel luminances (DR Sec). If the encoder and all its supply-able decoders have pre-agreed or know that the proxy image has a maximum luminance of 100 nit, this need not be communicated as an SDR_WPL metadatum. If the proxy image is e.g. a 200 nit maximum image, this will be indicated by filling its proxy white point luminance P_WPL with the value 200, or similarly for 80 nit etc. The maximum of the primary image (HDR_WPL= 1000), to be reconstructed by the dynamic range conversion circuit, will normally be co-communicated as metadata of the received input image, or video signal, i.e. together with the input pixel color triplets (Y_in, Cb_in, Cr_in). The various pixel lumas will typically come in as a luma image plane, i.e. the sequential pixels will have first luma Y11, second luma Y21, third luma Y31, and one pixel row below fourth luma Y12 and fifth luma Y22, etc. (same for the chroma components). Typically these color code values will be scanned, e.g. by means of a zig-zag scan, and the dynamic range conversion circuit will convert pixel by pixel to output pixel color triplets (Y_out, Cb_out, Cr_out). We will primarily focus on the brightness dimension of the pixel colors in this elucidation, unless certain chromatic aspects of the innovation are important. Various dynamic range conversion circuits may internally work differently, to achieve basically the same thing: a correctly reconstructed output luminance L_out for all image pixels (the actual details don't matter for this innovation, and the embodiments will focus on teaching only aspects as far as needed).

The mapping of luminances from the secondary dynamic range to the primary dynamic range may happen on the luminances themselves, but also on any luma representation (i.e. according to any EOTF, or OETF), provided it is done correctly, e.g. not separately on non-linear R'G'B' components. The internal luma representation need not even be the one of the input (i.e. of Y_in), or for that manner of whatever output the dynamic range conversion circuitry or its encompassing decoder may deliver (e.g. a format luma Y_sigfm for a particular communication format or communication system, "communicating" including storage to a memory, e.g. inside a PC, a hard disk, an optical storage medium, etc.).

We have optionally (dotted) shown a luma conversion circuit 301, which turns the input lumas Y_in into perceptually uniformized lumas Y_pc.

Applicant standardized in ETSI 103433 a useful equation to convert luminances in any range to such a perceptual luma representation:

$$Y\_pc = \log\_10\{1 + [RHO(WPL\_inrep) - 1] * power(Ln\_in; 1/(2.4))\} / \log\_10\{RHO(WPL\_inrep)\} \quad [\text{Eq. 1}]$$

In which the function RHO is defined as:

$$RHO(WPL\_inrep) = 1 + 32 * power\{(WPL\_inrep/10000); 1/(2.4)\} \qquad [Eq. 2]$$

We will assume for the elucidation this equation is used, although other equations are possible converting to a somewhat different perceptually more uniform luma domain. It is shown dotted, as this is an optimal step/circuit, since one can also decide to do the color transformation in another color representation domain (or often the pre-mapping may be incorporated in the e.g. luma mapping LUT of luma mapping circuit 302, which will then get the original input as input).

The value WPL_inrep is the maximum luminance of the range that needs to be converted to psychovisually uniformized lumas, so for the 100 nit SDR image this value would be 100, and for the to be reconstructed output image (or the originally coded image at the creation side) the value would be 1000.

Ln_in are the luminances along that whichever range which need to be converted, after normalization by dividing by its respective maximum luminance, i.e. within range [0,1].

Once we have an input and an output range normalized to 1.0, we can apply a luminance mapping function actually in the luma domain, as shown inside the luma mapping circuit 302, which does the actual luma mapping for each incoming pixel. (note that the exact shapes of the function (once being determined as a desired well working function for the luminance contents of objects in any particular HDR scene image) depends on the one hand which respective maximum luminance ML has been used for the normalization, and on the other hand which EOTF or OETF was elected for representing luminances as lumas, e.g. perceptually uniform lumas, but the essence of the story, and the technical components, in general stays the same; at least in the systems of applicant which can handle various technical formats or desiderata; the skilled person should have no trouble changing the locus of points on a luminance mapping curve in one representation, say normalized linear luminances, to corresponding point on a reshaped curve if one or both of the coordinate axis change to a fixed re-definition, e.g. Y_p=OETF(L_lin)).

In fact, this mapping function had been specifically chosen by the encoder of the image (at least for yielding good quality reconstructability, and maybe also a reduced amount of needed bits when MPEG compressing, but sometimes also fulfilling further criteria like e.g. the SDR proxy image being of correct luminance distribution for the particular scene -a dark cave, or a daytime explosion- on a legacy SDR display, etc.). So this function F_dec (or its inverse) will be extracted from metadata of the input image signal or representation, and supplied to the dynamic range conversion circuit for doing the actual per pixel luma mapping. In this example the function F_dec directly specifies the needed mapping in the perceptual luma domain, but other variants are of course possible, as the various conversions can also be applied on the functions. Furthermore, although for simplicity of explanation, and to guarantee the teaching is understood, we teach here a pure decoder dynamic range conversion, but other dynamic range conversions may use other functions, e.g. a function derived from F_dec, etc. The details of all of that are not needed for understanding the present innovative contribution to the technology.

In general one will not only change the luminances, but there will be a corresponding change in the chromas Cb and Cr. That can also be done in various manners, from strictly inversely decoding, to implementing additional features like a saturation boost, since Cb and Cr code the saturation of the pixels. Thereto another function is typically communicated in metadata (recoloring specification function FCOL, which may in a number of advantageous embodiments be a color LUT (C-LUT)), which determines the chromatic recoloring behavior, i.e. the mapping of Cb and Cr (note that Cb and Cr will typically be changed by the same multiplicative amount, since the ratio of Cr/Cb determines the hue, and generally one does not want to have hue changes when decoding, i.e. the lower and higher dynamic range image will in general have object pixels of different brightness, and oftentimes at least some of the pixels will have different saturation, but ideally the hue of the pixels in both image versions will be the same). This color function will typically specify a multiplier which has a value dependent on a brightness code Y (e.g. the Y_pc, or other codes in other variants). A multiplier establishment circuit 305 will yield the correct multiplier m for the brightness situation of the pixel being processed, i.e. the multiplier m is actually a function of the pixel luma: m(Y). A multiplier 306 will multiply both Cb_in and Cr_in by this same multiplier, to obtain the corresponding output chromas Cb_out= m*Cb_in and Cr_out=m*Cr_in. So the multiplier realizes the correct chroma processing, therefore the whole color processing of any dynamic range conversion being correctly configurable in the dynamic range conversion circuit.

Furthermore, there may typically be (at least in a decoder) a formatting circuit 310, so that the output color triplet (Y_out, Cb_out, Cr_out) can be converted to whatever needed output format (e.g. an RGB format, or a communication YCbCr format, Y_sigfm, Cb_sigfm, Cr_sigfm). E.g. if the circuit outputs to a version of a communication channel 379 which is an HDMI cable, such cables typically use PQ-based YCbCr pixel color coding, ergo, the lumas will again be converted from the perceptual domain to the PQ domain by the formatting circuit. Note that although we have shown a circuit that processes to Cb_out and Cr_out, and then processes further on the basis of those color components, that is in no means a limitation (of this mere elucidation). One can also make corresponding circuits which convert after the multiplication of the input chromas to the RGB domain, and then do further processing (e.g. luminance scaling; and output formatting; and possibly the display adaptation, which however often being a separate circuit may elect its own internal representation for calculation) on those RGB colors (linear or non-linear RGB).

It is important that the reader well understands what is a (de)coding, and how an absolute HDR image, or its pixel colors, is different from a legacy SDR image. There may be a connection to a display tuning circuit 380, which calculates ultimate pixel colors and luminances to be displayed at the screen of some display, e.g. a 450 nit tv which some consumer has at home.

However, in absolute HDR, one can establish pixel luminances already in the decoding step, at least for the output image (here the 1000 nit image).

We have shown this in Fig. 3B, for some typical HDR image being an indoors/outdoors image (the geometry and comprised image objects of which are shown in Fig. 3A). Note that, whereas in the real world the outdoors luminances may typically be 100 times brighter than the indoors luminances, in an actual master graded HDR image it may be better to make them e.g. 10x brighter, since the viewer will be viewing all together on a screen, in a fixed viewing angle, even typically in a dimly illuminated room in the evening, and not in the real world.

Nevertheless, we find that when we look at the luminances corresponding to the lumas, e.g. the HDR luminances L_out (e.g. of a reconstruction from an SDR proxy image as received), we typically see a large histogram (of counts N(L_out) of each occurring luminance in an output image of this homely scene). This spans considerably above some lower dynamic range lobe of luminances, and above the low dynamic range 100 nit level, because the sunny outdoors images have their own histogram lobe. Note that the luminance representation is drawn non-linearly, e.g. logarithmically. We can also trace what the encoder would do at the encoding side, when making the 100 nit proxy image (and its histogram of proxy luminance counts N(L_in)) of proxy luminances L_in.

An <u>encoder</u> from HDR to SDR (and similarly a decoder using the dynamic range conversion circuit 300 in a down-grading setting) will use (in a circuit like Fig. 3C) a concave function, as shown in Fig. 1. I.e. inside luma mapping circuit 302, a luma mapping function is used which squeezes together the brighter luminances from input to output, due to the limitations of the smaller luminance dynamic range. There is still some amount of difference between the brightness of indoors and outdoors, and still a considerable range for the upper lobe of the outdoors objects, so that one can still make the different colors needed to color the various objects, such as the various greens in the tree. However, there must also be some sacrifices. Firstly the indoors objects will display (assuming for the moment an 100 or 200 nit display would faithfully display those luminances as coded, and not e.g. do some arbitrary beautification processing which brightens them) darker, darker than ideally desired, i.e. up to the indoors threshold luminance T_in of the HDR image. Secondly, the span of the upper lobe is squeezed, which may give the outdoors objects less contrast. Thirdly, since bright colors in the tent-shaped gamut as shown in Fig. 1 cannot have large saturation, the outdoors colors may also be somewhat pastellized, i.e. of lowered saturation. But of course if the grader at the creation side has control over all the functions (F_enc, FCOL), he may balance those features, so that some have a lesser deviation at the detriment of others. E.g. if the outdoors shows a plain blue sky, the grader may opt for making it brighter, yet less blue. If there was a beautiful sunset, he may want to retain all its colors, and make everything dimmer instead, in particular if there are no important dark corners in the indoors part of the image, which would then have their contents badly visible, especially when watching tv with all the lights on (note that there are also techniques for handling illumination differences and the visibility of the blacks, but that is too much information for this patent application's elucidation).

The middle graph shows what the lumas would look like for the proxy luminances, and that may typically give a more uniform histogram, with e.g. approximately the same span for the indoors and outdoors image object luminances. The lumas are however only relevant to the extent of coding the luminances, or in case some calculations are actually performed in the luma domain (which has advantages for the size of the word length on the processing circuitry). Note that whereas the absolute formalism can allocate luminances on the input side between zero and 100 nit, one can also treat the SDR luminances as relative brightnesses (which is what a legacy display would do, when discarding all the HDR knowledge and communicated metadata, and looking merely at the 0-255 luma and chroma codes).

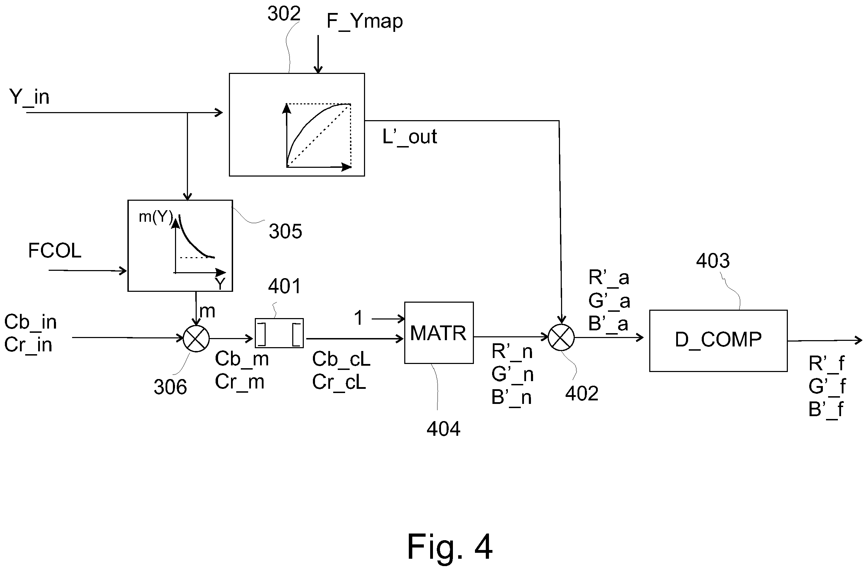

**Fig. 4** shows one of the possibilities for realizing a pragmatic circuit for processing the pixel colors for a luminance mapping of a dynamic range change (e.g. downgrading incoming HDR lumas (e.g. coded as Perceptual Quantizer lumas) to lower dynamic range lumas such as SDR lumas (Rec. 709 lumas), or upgrading e.g. an SDR color and its luma to an HDR pixel color).

The luma mapper will implement the e.g. relative brightening of a pixel luma (typically normalized to 1.0 as maximum, later convertible to absolute luminances, since that makes for an easy independence of the number of bits coding the luma word), which after converting lumas to luminances with the applicable EOTF corresponds to a mapping of an input pixel luminance to an output luminance as desired, as illustrated with Fig. 1. The original luma mapping function (F_Ymap) to be applied may e.g. be co-supplied in the input video signal as metadata created by the video's creator, or, it may be calculated in the receiving apparatus itself. Those details are embodiment aspects beyond the scope of this application, since we teach about aspects of a core calculation circuit, that should be able to handle all such applications.

Assume for elucidation the output luminance L'_out is some non-linear version of the actual luminance (e.g. a square root; hence the dash behind the L character). It may e.g. be a luma, when multiplicative scaling by second multiplier circuit 402 is performed in the luma domain. In some scenarios leaning more towards a more direct version of the brightness scaling by means of luminance luminance as is or a non-linear power function of luminance (e.g. square root of luminance) may be used. It could also be the actual (linear) luminance, but that would require a high precision in the calculation circuit, so is in general less preferred.

Note that in the below embodiments the inventor finds it particularly favorable to use a luma at the input and the output, and it is advantageous if the definition of those lumas is the same (i.e. the brightness is in the same domain at input and output), e.g. both Rec. 709 lumas, or both Perceptual Quantizer lumas.

The logic behind these calculation circuits is the following.

Chroma a.k.a. chrominance components (so also input blue chroma Cb_in, and input red chroma Cr_in) depend linearly on the brightness of a pixel color (by **brightness** we mean any measure quantifying the brightness of a pixel, the luminance being one such measure).

This is inter alia due to their definition:

E.g., in SDR, the OETF is approximately a square root.

Basic additive color mixing colorimetry defines a color by a linear contribution (amount of light of said primary color) of a red R, green G and blue B color component.

For the technical (and hence coding) system, those components are transformed to non-linear versions by applying the OETF, ergo: R'= OETF(R) which is approximately sqrt(R), and the same for G', and B'

The luma and chroma coefficients are now defined from those non-linear red, green and blue components, which by themselves grow with increasing brightness or luminance of the pixel color. The luma Y, and the Cb and Cr coefficients of a color coding are now defined as a linear combination of the non-linear R'G'B' coefficients (a.k.a. components) coding the color.

This is an example of what is called in colorimetry "matrixing": the coding of a color in a first basis consisting of three primary vectors can be transformed into the coding in a second basis consisting of three different primary vectors by applying a 3x3 matrix to the first coefficients (i.e. the amount of primary along each basis vector in the first basis) to obtain the second coefficients, which specify the color in the second basis (in this example the YCbCr coding which will be used for communicating the images). The coefficients of the matrix are fixed, depending on the elected primary bases. E.g. the spectra of an old CRT, which correspond to the Rec. 709 primaries, have less saturated chromaticities (the chromaticity is a brightness-independent combination of hue and saturation of a color) than e.g. DCI-P3 or Rec. 2020 primaries, and this will reflect in different values of the matrix coefficients, though not change the basic definition of luma and chroma. The matrix can be preloaded (or even pre-constructed in some device embodiments) with fixed matrix coefficients when the required input and output basis is established, i.e. prior to doing the actual color mapping calculations for the image pixels.

$$\text{Luma} = \text{defined as } Y = a*R' + b*G' + c*B',$$

wherein as said the constants a,b, and c depend on the elected additive primaries of the color definition (e.g. the primaries that the display will use).

The chroma components are excess color axes compared to achromatic colors (greys).

$$Cb = k*(B'-Y);$$

$$Cr = l*(R'-Y) \qquad \text{[Eqs. 3]}$$

Since Y itself is a combination of R', G' and B', one can also write the relationship between the two different color coding triplets as a matrix:

$$[Y; Cb; Cr] = [n11\ n12\ n13;\ n11\ n22\ n23\ ;\ n31\ n32\ n33][R';\ G';\ B'] \qquad \text{[Eq. 4]}$$

Since Y and the non-linear RGB components grow with increasing brightness, the chroma components are brightness dependent.

That is a complexity.

In SDR, i.e. staying exclusively in the same SDR domain from input to output, there would be no issue. One could use the chroma components to saturate or desaturate a color (turning a red color into a pale pink e.g.).

But when going e.g. from SDR to HDR output, one now has two axes of brightness, e.g. an input luminance ranging from 0 to 100 nit, and an output luminance from 0 to 1000 or even 5000 nit. An elegant solution to this is to work with dimensionless/brightness-less pixel colors. One can pretend that each pixel color, no matter how bright it originally was, has a unit brightness in its input domain.

One sees this condition in Fig. 4 from the fact that the matrix calculation circuit 404 always gets exactly the value one as its luma input (irrespective the original input luma Y_in; this should not be confused with maximizing the maximum value of a set of lumas, e.g. of a range of lumas, e.g. all lumas occurring in an image, or all lumas potentially occurring in a luma definition, equaling one).

This can be achieved by dividing the chromas by the input luma any pixel has.

This can be achieved by the multiplier establishment circuit 305 (e.g. a lookup table yielding for any possible input luma $Y\_in$ of a pixel the corresponding multiplier m or actually m(Y)) being so configured that it always yields $1/Y\_in$ for any index $Y\_in$ into the LUT.

Note that in general this factor only corrects for the brightness, and one may also want to apply some saturation change for dark versus bright pixels, so the actual recoloring specification function FCOL (e.g. received from metadata of the input video signal) may actually have a somewhat different shape than a hyperbola, but we will focus on the problem of the basic processing per se (e.g. a simple pass-through scenario, where the luma mapping is an identity transform, yet, at the output we do not get identical input colors as at the input, as we are supposed to get for a simple pass-through, which will also illustrate the problems of more complicated actual color mapping scenarios).

If this multiplier is multiplied by the chroma components (performed by first multiplication circuit 306), one indeed gets the normalized chroma components $Cb\_m$, $Cr\_m$:

$$Cb\_m = m*Cb\_in = Cb\_in/Y\_in;$$

$$Cr\_m = m*Cb\_in = Cb\_in/Y\_in \qquad [\text{Eqs. 5}]$$

Later on, the chroma components get scaled again by the correct (non-linear) output luminance $L'\_out$, so correctly coordinate chromas for luminances up to e.g. 5000 nit maximum pixel luminance (brightest HDR pixel) are output.

This is achieved by the matrix calculation circuit 404 converting the normalized chroma components to normalized non-linear RGB components: normalized red $R'\_n$, normalized green $G'\_n$, and normalized blue $B'\_n$.

These RGB components are scaled by the second multiplication circuit 402, and scaled RGB components result:

$$R'\_a = L'\_out* R'\_n;$$

$$G'\_a = L'\_out* G'\_n;$$

$$B'\_a = L'\_out* B'\_n \qquad [\text{Eqs. 6}]$$

Finally, a (often display-related, in which one e.g. may want to do some final tweakings regarding what some connectable display desires as color input) final calculation circuit 403 (which in practice may be a LUT, or set of LUTs again, the D-LUT) may transform the values of the scaled RGB components to yet other, final RGB components ($R'\_f$, $G'\_f$, $B'\_f$).

$$R'\_f = FD(R'\_a);$$

$$G'\_f = FD(R'\_a);$$

$$B'\_f = FD(R'\_a) \qquad [\text{Eqs. 7}]$$

wherein FD is some suitably chosen function. For the moment it doesn't matter what transformation is performed, and we will consider for elucidation it to be an identity function.

This principle is elegant, but there is a first problem: if multiplier establishment circuit 305 is constructed in practice as a LUT, one cannot reach infinity for $Y\_in$ at (or near) zero (for the brightest colors the multiplier is typically equal to 1.0).

E.g., if the LUT has 10 bits output, a normal linear definition would yield as highest value power(2;1 0)-1 = 1023.

One can use definition tricks, like e.g. multiplying the linear value by a coarseness determiner CR, e.g. CR=4. Other definitions are possible, where higher precision of the LUT outputs is gained at the detriment of range, e.g. going only as high as 32.

In that case, the largest value could be as high as 4* 1024-1=4095. Although that is a higher value than 1023, it is still quite different from infinity, so some errors would be made for colors with small luma, e.g. dark blues.

There is also a second significant source of errors. The matrix cannot accept (arbitrarily) large inputs either, since then at the very least it would not function for what it was designed. Equations 3 have such constants that the range of possibly occurring chroma values is supposed to fall between -0.5 and 0.5, since that is the known primary color basis for YCbCr color definition.

Ergo, typically systems as elucidated by Fig. 4 will have a clipper 401 positioned between the first multiplication circuit 306 and the matrix calculation circuit 404, which makes sure that any value of $Cb\_m$ and $Cr\_m$ get clipped into the valid range, yielding clipped chromas $Cb\_cL$ and $Cr\ cL$:

$$Cb\_cL = CLIP(-0.5; Cb\_m; 0.5);$$

$$Cr\_cL = CLIP(-0.5; Cr\_m; 0.5) \qquad [Eqs. 8]$$

This poses rather significant problems on some (a small percentage of all actually occurring colors in typical videos, but still) colors in some scenarios (e.g. for wide gamut primaries like Rec. 2020).

We found that blue colors may pose a problem (and at risk are all colors that have relatively low natural brightness, such as blues reds and purples).

The fully saturated blue primary color of Rec. 2020 has -at maximum driving level i.e. maximum possible brightness of such primary blue- a brightness which is only 5.9% as bright as the brightness of maximum white.

Hence the chroma will be multiplied by 1/0.059 = 17, yielding for the Cb_in of maximum brightness primary blue which is 0.5 a value at the input of the clipper of 8.5, which is way above the clipping maximum of 0.5.

In practical embodiments this issue can be mitigated to some extent by using a more appropriate coarseness determiner CR for the definition of the meaning (i.e. the coding) of the natural 1/Y_in values, but this cannot be tuned at will, since it leads to precision problems at the other end of the C_LUT.

A pragmatic optimum for some embodiments of color mapping circuitry of the described type has been found to be: set CR=4.

That would mean that 8.5/4= 2.125 goes into clipper 401, but that is still so far above the 0.5 value, that a non-negligent amount of pixel chromas will get clipped.

That leads to the following problem. When we input e.g. an image of a pub, which is quite dimly lit, except for some light effects, which are a soft blue light under the bar, and some lit blue glasses on top of the bar, some of those blue colors get, after the clipper, a blue chroma component (the red chroma can be ignored if the pixel color is essentially a blue) which is far too low compared to what it should be (as it was in the input color). Ergo, after multiplication by the output luminance L'_out to obtain the final output colors, for e.g. a high dynamic range image, the chroma component is still only 1/4th what it should be (in a linear situation; and in non-linear representation things may be even worse). Ergo, instead of dark blue colors, we get almost colorless, dark grey colors. And this of course has a very different visual effect, especially for critically graded movies, ergo, it can be categorized as an infrequent artefact, even if the system is put in a pass-through mode (i.e. where the decoder is merely doing -in principle needless- calculations which should yield exactly the same output colors as the input pixel colors.

And as said, this calculation principle/circuit can be used on different color definitions, such as different luma definitions according to different HDR EOTFs (which can vary considerably regarding their technical definition and therefore visual results).

If the input colors are Rec 709 OETF SDR input lumas and chromas, the passthrough output will typically lose some of the blueness, yielding rather dark and unimpressive blue glasses on top of the bar in the output image. If the input colors are PQ HDR lumas and chromas, due to the highly non-linear nature of this EOTF the output blues are almost black (since under a non-linearity 1/4th can actually represent e.g. ¼*1/4*1/4, which yields a significant loss of colorfulness).

Especially in systems that calculate in the highly non-linear PQ domain (and wide gamut primaries such as Rec. 2020), the primary blue luma value can become very small. E.g. for a CR=4 the multiplier of the color would get 1/(4*Y'_in_full_primary_blue)= 4.218. The Cb_m and Cr_m vlaue would be m23*0.25/m13 respectively m33*0.25/m13 which yields 2.109 respecitively -0.1695 (wherein the m coefficients are of the YCbCr to RGB matrix as given below in Eq. 13).

Matrix calculation circuit (404) would get 1, 4*0.5 (note, the factor 4 can also be incorporated in the matrix coefficient, in which it would get 0.5 as input), and 4*(-0.1695) as input, which would yield as output [0.000000000078708; 0.062726724745395; 0.282279938658367], which in nit becomes (via the definition of the PQ EOTF): [0; 0.101487055367786; 7.988339690189608]. Ergo, the first two values being negligible this is indeed a blue color. However, even though we set this circuit in pass-through (i.e., it should give the same result at the output as was the input), we now only have 8 nit blue (due to the loss of the clipper and the inconvenient C_LUT).

A solution may be to use highly precise LUTs, with more input taps and e.g. 30 bit output, but this optimization parameter always depends on various factors, so it may not be a solution for all products in the market, especially not those that are already deployed.

Another trick may be to try to raise the luminance, so the normalized Cb_m an Cr_m will be not so large. It may not be feasible always to brighten the blues, since then one just gets a brighter image, and that may not give the same visual impression as the dark pub. Another trick is to try to add component energies of other primary colors, since it are the unmixed pure primaries that are the darkest colors (e.g R' =0; G' =0; B' = x), where x is some absolute or relative value. But that would also not be an elegant solution, since then one gets a hue and saturation shift.

So one must find a very different technical approach to solve or mitigate these kinds of problems.

SUMMARY OF THE INVENTION

The problems of color transforming of some critical colors of a few difficult HDR images (down-grading from HDR, or to become HDR images if starting from SDR images) are handled by an innovative pixel color processing circuit (500) arranged to receive an input luma ($Y\_in$) and an input blue chroma ($Cb\_in$) and input red chroma ($Cr\_in$), and comprising a luma mapping circuit (302) arranged to receive a luma mapping function ($F\_Ymap$) to transform the input luma into a non-linear output luminance ($L'\_out$), or output luma, and comprising a multiplier establishment circuit (305) arranged to establish a (chroma) multiplier (m) for the input luma which depends on the input luma ($Y\_in$), and a first multiplication circuit arranged to multiply the input blue and red chroma by the multiplier to obtain normalized chroma components ($Cb\_m$, $Cr\_m$), and a clipper (401) to obtain clipped chroma components falling within a range between a negative clipping constant (CLCL) and a positive clipping constant (CLCU), and a matrix calculation circuit (404) arranged to transform the normalized chroma components and a normalized luma into normalized red, green and blue components ($R'\_n$, $G'\_n$, $B'\_n$), and a second multiplication circuit (402) to multiply the non-linear output luminance ($L'\_out$), or output luma, by the normalized red, green and blue components ($R'\_n$, $G'\_n$, $B'\_n$) to obtain scaled red, green and blue components ($R'\_a$, $G'\_a$, $B'\_a$);

wherein the luma mapping circuit (302) derives a secondary luma mapping function ($F\_YmapC$) to apply to the input luma based on the luma mapping function by applying a first calculation which equals: $F\_YmapC(Y\_in)=(F\_Ymap(Y\_in)+D)/(1+D)$,

wherein D is an offset value which is constant for the processing of at least one image;

wherein the multiplier establishment circuit (305) establishes the multiplier as a multiplication of a first multiplier component which depends on the input luma by a second multiplier component which equals a reciprocal of a value which equals the sum of an output of the luma mapping function when having the input luma as input and the offset value (D);

and wherein the pixel color processing circuit comprises a final calculation circuit (403) which performs a transformation of the scaled red, green and blue components ($R'\_a$, $G'\_a$, $B'\_a$) into final red, green and blue components ($R'\_f$, $G'\_f$, $B'\_f$) which depends on a second calculation which equals: calculating a first result by subtracting from a respective one of the scaled red, green and blue color components a value which equals: the offset value divided by one plus the offset value;

calculating a second result being a maximum of zero and the first result; and

multiplying this second result by one plus the offset value.

For luma normalized to 1.0 as input to matrix calculation circuit 404 a value of CLCL=-0.5 and CLCU = 0.5 may be advantageous, but other values of the clipper may be used too (it may correlate e.g. with the CR value employed).

Note that the clipper is not quintessential as the present invention may work also with only C-LUTs and no clipping, but usually some clipping will be present. Although a number of values for the offset value would work well, it may be advantageous if an optimal value for the offset value is used in an embodiment of the pixel color processing circuit, wherein the (optimal) offset value ($D\_opt$) is set as a constant (CO) minus the value of a coefficient (m13) of a RGB-to-YCbCr conversion matrix which specifies a contribution of an amount of blue primary to a pixel color luma. The constant may be taken equal to 1.0. Typically it is a value greater than zero, and preferably less than or equal to 1.0. The range of the C-LUT will depend on 1/D.

Other embodiments of the pixel color processing circuit may calculate advantageous discretized values for the offset value, by determining the offset value as an integer $D\_dis$ which is calculated based on a first integer P and a second integer IN, wherein the integer P is calculated to be the smallest one of a first number of bits of a LUT for luma processing and a second number of bits of a LUT of the final calculation circuit (403), and wherein the second integer IN is chosen so that $\min(D\_dis-D)$ is a positive number and as close as possible to zero, wherein D is a real-valued calculated offset value.

Such a pixel color processing circuit may be advantageously used in larger circuits or devices, e.g. various embodiments of a high dynamic range image encoder (700) comprising an input for receiving a master graded HDR image ($Mstr\_HDR$), and comprising the pixel color processing circuit (500) (in any of its embodiments) and used for processing pixel colors of the master graded HDR video to obtain final red, green and blue color components ($R'\_f$, $G'\_f$, $B'\_f$), and comprising a formatter (701) for formatting the final red, green and blue color components into image coding data of an encoded HDR image ($Im\_HCOD$) for storage or communication. The format may depend on the need, e.g. one may reconvert to a YCbCr format if the image is one of a set of images of a video, and that video may then e.g. be compressed according to MPEG-VVC or AV1, and e.g. stored for later use. Such a non-realtime scenario may be advantageous for movies, and the storage may be on a server, or a blu-ray disk. Real-time video production, e.g. television show broadcasting, may directly communicate out the calculated and formatted video images, e.g. over terrestrial video communication like DVB or a 5G mobile communication, or an internet service, etc.

Another advantageous apparatus benefiting from using the present innovation is a high dynamic range image decoder (800) comprising an input for receiving an encoded HDR image (Im_HCOD), and a color converter (801) to yield a set of YCbCr codings of pixel colors of the encoded HDR image to be sent to the pixel color processing circuit (500), wherein this pixel color processing circuit (500) is arranged to calculate an adapted HDR image (Im_ADPT) for further communication, storage, or display. An example of a decoder with storage may be a transcoder, which receives e.g. a 5000 nit PQ HDR image, and transcodes it to a Rec. 709 HDR proxy image plus metadata (i.e. which contains all the data enabling a faithful reconstruction of a HDR image later), and this image may be stored e.g. on a server of an internet-video service, for communicating to receivers, both legacy SDR receivers or novel HDR capable displays. The decoder may also reside in e.g. a television or other display-comprising apparatus, and then the adapted HDR image may specifically be adapted to the capabilities of that display, and straight after calculation be displayed.

Advantageously aspects of the innovation are applied as a method of pixel color processing comprising: receiving an input luma (Y_in) and an input blue chroma (Cb_in) and input red chroma (Cr_in), and luma mapping using a luma mapping function (F_Ymap) the input luma into a non-linear output luminance (L'_out), or output luma;

establishing a multiplier (m) (for the input luma) which depends on the input luma (Y_in), and multiplying the input blue and red chroma by the multiplier to obtain normalized chroma components (Cb_m, Cr_m), and clipping the normalized chroma components to a range between -0.5 and 0.5 to obtain clipped chroma components (Cb_cL, Cr_cL);
transforming the clipped chroma components and a luma component which is equal to 1.0 into normalized red, green and blue components (R'_n, G'_n, B'_n) by using a color conversion matrix; multiplying the non-linear output luminance (L'_out), or output luma, by the normalized red, green and blue components (R'_n, G'_n, B'_n) to obtain scaled red, green and blue components (R'_a, G'_a, B'_a); wherein the luma mapping applies to the input luma a secondary luma mapping function (F_YmapC) which is based on the luma mapping function by applying a first calculation which equals: F_YmapC(Y_in)=(F_Ymap(Y_in)+D)/(1+D),
wherein D is an offset value which is constant for the processing of at least one image;
wherein the multiplier is established as a multiplication of a first multiplier component which depends on the input luma by a second multiplier component which equals a reciprocal of a value which equals the sum of an output of the luma mapping function when having the input luma as input and the offset value (D);
performing a transformation of the scaled red, green and blue components (R'_a, G'_a, B'_a) into final red, green and blue components (R'_f, G'_f, B'_f) which depends on a second calculation which equals: calculating a first result by subtracting from a respective one of the scaled red, green and blue color components a value which equals: the offset value divided by one plus the offset value;
calculating a second result being a maximum of zero and the first result; and
multiplying this second result by one plus the offset value.

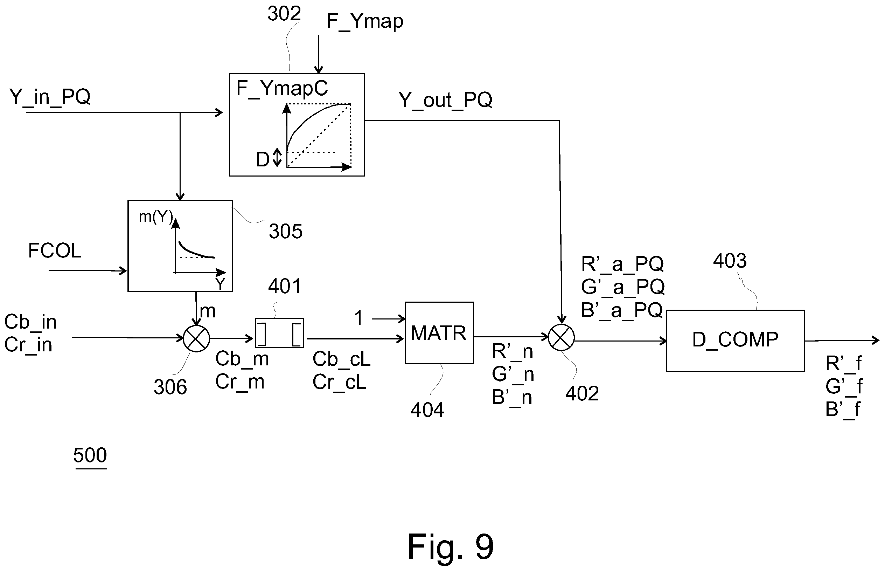

Whereas we elucidate a first variant of the invention with a non-linear version of a luminance (L'_out) as output, i.e. e.g. L'_out1=power(L_out; ½) or L'_out2=power(L_out;1/3), wherein L_out is the normal (linear) luminance of a specific pixel as calculated based on how bright that pixel was in the input image, which linear luminance may have been normalized to some range, which has to be later multiplied by another scaler to obtain the actual luminance in nits in some embodiments, the skilled person understands the same principle can also work when lumas are calculated on the output of the luma mapping circuit, e.g. mapping PQ luma input to PQ luma output, etc. That embodiment, which is also preferable in some applications, is elucidated with Fig. 9.

An embodiment of the method has the offset value (D_opt) set as a constant (CO) minus the value of a coefficient (m13) of a RGB-to-YCbCr conversion matrix which specifies a contribution of an amount of blue primary to a pixel color luma, wherein the constant may e.g. be equal to 1.0.

Another embodiment of the method has the offset value determined as an integer D_dis which is calculated based on a first integer P and a second integer IN, wherein the integer P is calculated to be the smallest one of a first number of bits of a LUT for luma processing and a second number of bits of a LUT of the final calculation circuit (403), and wherein the second integer IN is chosen so that min(D_dis-D) is as close as possible to zero, wherein D is a real-valued calculated offset value.

For some embodiments, specifically when working with PQ luma input, an optimal offset value may determined based on a maximum luminance of an input image comprising the input luma. This maximum luminance may be e.g. a luminance of the brightest pixel in the image (or a related value, such as e.g. 110% or 90% of that value), or it may be a maximum luminance value co-communicated for the input image in metadata, e.g. the maximum capability of a mastering display which indicates for which display maximum capability the input PQ image is optimally graded.

BRIEF DESCRIPTION OF THE DRAWINGS

These and other aspects of the method and apparatus according to the invention will be apparent from and elucidated with reference to the implementations and embodiments described hereinafter, and with reference to the accompanying drawings, which serve merely as non-limiting specific illustrations exemplifying the more general concepts, and in which dashes are used to indicate that a component is optional, non-dashed components not necessarily being essential. Dashes can also be used for indicating that elements, which are explained to be essential, but hidden in the interior of an object, or for intangible things such as e.g. selections of objects/regions.

In the drawings:

Fig. 1 schematically shows examples of various luminance dynamic range changes (Fig. 1C) of image objects in a cave scene (Fig. 1A), which get objects get different (average) luminances when represented in different maximum luminance versions of the same image; such luminance mappings can be implemented by using luminance mapping functions (Fig. ID) to be applied to any pixel's luminance, depending only on the input luminance irrespective of the position of the pixel in the image, and such functions can also be calculated in a luma domain coding the luminances; also shown in Fig. 1B is how one can normalize the input color gamut and the output gamut and then show the luminance mappings as vertical shifts of the input colors in the gamut;

Fig. 2 schematically shows various source to sink (user) video or image communication systems which may implement the present innovative embodiments;

Fig. 3 schematically shows some further details of an embodiment of a video decoding apparatus which can transform e.g. absolute luminance-defined HDR images;

Fig. 4 schematically shows one embodiment of a color transformation comprising luma mapping, usable for dynamic range changes (upwards to higher or downwards to lower dynamic range than the dynamic range of the input image) with a certain circuit configuration that works fine on most images but can show some artefacts for a small percentage of specific image objects;

Fig. 5 schematically elucidates the changes which can beneficially be employed in circuits of a type like shown in Fig. 4, which innovation can handle the artefacts;

Fig. 6 shows an example of a color LUT which can according to the innovation be used by the multiplier establishment circuit 305;

Fig. 7 shows an image encoder comprising the present pixel color processing circuit or performing the pixel calculation method;

Fig. 8 shows an image decoder comprising the present pixel color processing circuit or performing the pixel calculation method; and

Fig. 9 shows an embodiment applying principles of the present innovation in a calculation with a PQ luma domain on the input and output of the brightness processing.

DETAILED DESCRIPTION OF THE EMBODIMENTS

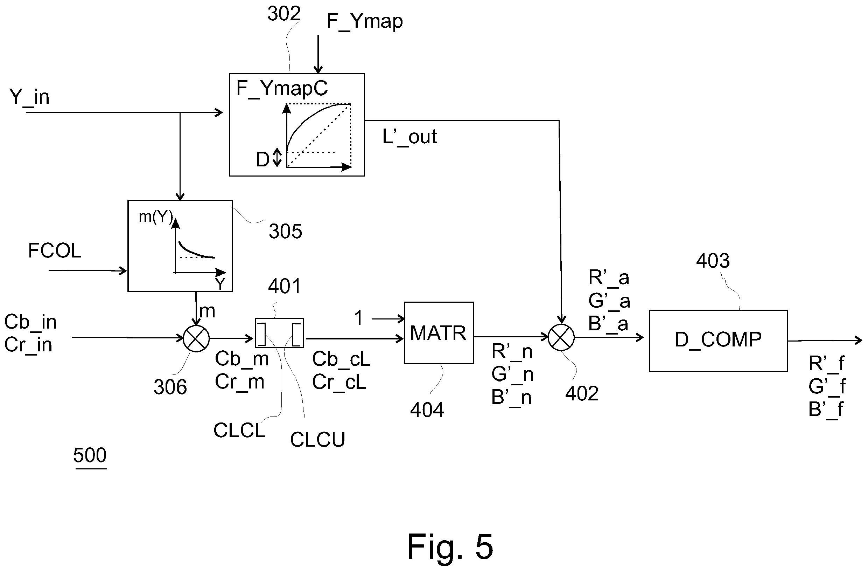

**Fig. 5** shows the pixel color processing circuit (500) according to the innovative insights. It still consists of luma and chroma processing circuits, but they function differently, however, the envisaged result of the image creator (e.g. how a HDR set of object brightnesses should be re-graded/down-mapped for various different display maximum luminance capabilities as indicated in the received luma mapping function F_Ymap) should be substantially the same.

The purpose is to "regularize" the C-LUT which yields the multipliers, so that it doesn't yield such a high value for pixel lumas near zero (in fact, it has to be precise for high pixel brightnesses and reach large values for low brightnesses if not treated as per the invention, which is not a good use of a limited amount of output bits).

A first adaptation of the luma processing is in the arranged calculation behavior of the luma mapping.

Luma mapping circuit (302) ingests the luma mapping function F_Ymap (whatever shape it has, e.g. relatively boosting the darkest input lumas, keeping a high contrast in the middle range, and compressing the brightest lumas; or typically a largely inversely shaped function for up-grading), and performs the following calculation on it to obtain a secondary luma mapping function F_YmapC for doing the actual per pixel luma mapping (note, the calculation of the F_YmapC may be done outside the luma processor, and e.g. pre-loaded before mapping the first pixel of an image).

E.g., one can pre-calculate a LUT for all normalized lumas between 0 and 1 acting as indices Y into the LUT, where later for each pixel its input luma Y_in will function as the index for that pixel to lookup as output the mapped luma, i.e. the corresponding value of the output luminance L'_out:

$$F\_YmapC[Y] = (F\_Ymap[Y]+D)/(1+D). \qquad [\text{Eq. } 9]$$

The offset value D may be a suitable constant, chosen so that no clipping or not too much clipping of any pixel color's chroma occurs (e.g. some experimental well-working value can be chosen, and baked into e.g. firmware for transforming any input function shape and therefrom pre-loading the LUT of the luma mapping circuit), and typically also not too high since that results in reduced precision of the luma processing (which typically also has a fixed size/word-length LUT). As shown below there is a strategy to choose an optimal value of the offset value D if so desired.

Secondly, one may typically want to formulate the chroma processing as a multiplication of partial multipliers.

A coloring multiplier m_sat (typically m_sat[Y], but it could also be e.g. 0.9 for all Y) can be used in case one wants to adjust the chroma of various parts of the image which have different brightness (e.g. boost the saturation of some darker colors to compensate for imperfect brightening, or reduce the saturation of brightened bright colors to better fit them in the gamut tip, etc.).

For the remainder of the elucidation, of the other partial multipliers, we shall assume a condition that the output color is to have the same chromaticity as the input color (i.e. substantially same hue and saturation, at least according to the prescribed color processing), and only a different relative or absolute brightness (but this requires as explained above chromas which are correctly coordinated with the new luma, otherwise, if the chroma is relatively e.g. 2x less, then that will be seen as a desaturated color, which doesn't fulfill the equal chromaticity condition). This can be achieved by setting m_sat[Y]=1 for all Y (or simply striking it from the calculation).

A second partial multiplier follows the behavior one would see when not implementing the invention.

As said, according to the ideal theory, the multiplier of the LUT simply implements the division by the luma. That is, the input luma. But because input and output luma are also related via the luma processing, one can also write it in terms of a multiplier which represents the luma change (e.g. luma boost):

$$M\_luma[Y]=F\_Ymap[Y]/Y$$

For the original, non-adapted luma mapping function (and Y having any value, e.g. specifically the input luma of a pixel).

Ergo, the 1/Y which should be filled in the C-LUT, to come out as the multiplier m, can also be written as M_luma [Y]/F_Ymap[Y]

The C-LUT of the multiplier establishment circuit 305 will now be calculated according to the innovative equation:

$$(Chroma) \text{ multiplier } m[Y]=m\_sat[Y]*M\_luma[Y]/( F\_Ymap[Y]+D) \text{ [Eq. 10]}$$

Ergo, the chroma multiplier is established as a multiplication of a first multiplier component which depends on the input luma (M_luma[Y]) by a second multiplier component which equals a reciprocal of a value which equals: the sum of an output of the luma mapping function (when having the input luma as input) and the offset value D.

Thirdly, the processing of the final calculation circuit (403) will also be adapted (which typically is realized as 3 parallel D-LUTs calculating on input respective red, green and blue components, to obtain final red, green and blue components, e.g. for storing the correctly processed image for broadcasting to receivers if the calculation circuit is embodied in an encoder, or displaying if the circuit is embodied in a HDR decoder of a television or mobile phone, etc.).

If the D-LUT was not supposed to be used for any specific last processing, i.e. it would have been set to identity transform, it would now according to the innovation be filled with the following equation:

$$F\_D[V']= \max(V'- D/(1+D); 0)*(1+D) \qquad\qquad \text{[Eq. 11]}$$

Wherein V' represents each one of the three non-linear RGB' components R'_a, G'_a, and B'_a getting D-LUT mapped (similarly).

However, it may be that the D-LUT was already supposed to do some last processing, e.g. before displaying the image on some display with some characteristics. The processing could e.g. implement a last contrast change, or a conversion of the components from a first non-linear definition (typically defined by an elected EOTF) to a different second non-linear definition (e.g. a coding which the TV may expect at its input, or which the display panel may expect inside the TV).

Say that without the invention this processing would be V'_out=F_EE(V'_in), then when implementing the innovation Eq. 11 would become:

$$F\_D\_EE[V']= F\_EE(F\_D[V']) \qquad\qquad \text{[Eq. 12].}$$

So the final calculation circuit (403) performs a transformation of the scaled red, green and blue components (R'_a, G'_a, B'_a) into final red, green and blue components (R'_f, G'_f, B'_f) which **depends on** a second calculation which equals:

calculating a first result by subtracting from a respective one of the scaled red, green and blue color components a value which equals: the offset value divided by one plus the offset value;
calculating a second result being a maximum of zero and the first result; and
multiplying this second result by one plus the offset value.

In some less-advanced embodiments, the matrix will be fixed, and simply the inverse of the RGB' to YCbCr matrix described above.

It is known from colorimetry that such a matrix will perform the following equation:

$$[R'\_n; G'\_n; B'\_n]= [1\ 0\ m13;\ 1\ m22\ m23;\ 1\ m32\ 0][1; Cb\_cL; Cr\_cL]\ [Eq.\ 13]$$

OPTIMAL EMBODIMENTS OF THE GENERAL PRINCIPLE

A second technical question one can ask is which would be an optimal value for the offset value D.

This can be derived from the processing result of primary blue.

Revisiting Eq. 4, let's see what the conversion of primary blue with a certain brightness x would yield, i.e. when inputting [R' ; G'; B' ] = [0;0;x]

$$[Y; Cb; Cr]=[n13*x; n23*x; n33*x]$$

Ergo, since we were interested in the luma component for the division 1/Y, this will depend on x and the parameter n13. On the one hand if x becomes smaller one would think the division becomes smaller, but on the other hand the Cb_in and Cr_in values will also become smaller (than 0.5 for the maximum brightness maximum blue). So we can set x=1.

The inventor found an optimal offset value D_opt:

$$D\_opt= \max (CO- n13;\ 0) \qquad [Eq.\ 14]$$

Wherein CO is a constant, which would be equal to 1 if no correction value CR is being used. Otherwise the constant would be 1/CR.

Another optimization for fixed-point implementation starts from a discrete output range of F_Ymap[Y] (e.g. k bit resulting in range [0, ... 2^k-1]/2^k), being equal to or different from the range of the D-LUT, e.g. being n bit, i.e. corresponding to 0 up to 2^n minus 1 (the ^ operator indicates the power function).

The inventor found that one can then best choose a discrete offset value which equals:

D_dis= IN/(2^P-IN), in which the integer P=min(k,n). The integer IN fulfilling this condition can then be chosen so that min(D_dis-D) is as close as possible to zero (D being the continuous value D), and also the result of the minimization must be a positive value.

Both thresholds of the luma mapping and the D-LUT will then be discrete since

$$D\_dis/(D\_dis+1)=IN/2^P.$$

In case specific CR values are chosen to change the multipliers for the two chromas (e.g. changed by only 1/4th, leaving a discrepancy of 1/4th), this can be corrected in the matrix, by making the elements for multiplication by chroma CR times larger.

For PQ-based systems, it may be advantageous to determine the optimal D value based on the maximum luminance of the input image(s) ML_V. Maximal blue corresponding to this maximum luminance value (i.e., the maximum one could pump the luminance of the blue channel, if were one to also add the maximum amount of red and green one would be getting e.g. ML_V = 5000 nit achromatic white) would generate a luma equal to m13*OETF_PQ(ML_V). Chroma values would be [m23; m33]*OETF_PQ(ML_V).

An optimal maximum-luminance-dependent offset value D_MLdep could then be determined as:

$$D\_MLdep>= ((1/CR)-m13)*OETF\_PQ(ML\_V) \qquad [Eq.\ 15]$$

The range of the C-LUT is advantageously reduced. E.g. if D is chosen to be 0.1907 it is found that the range changes from [0, + infinity] -the zero occurring if one doesn't keep the brightest colors unchanged, but maximally desaturates them with the partial multiplier m_sat[Y]- to [0, +5.2429], which is much better manageable.

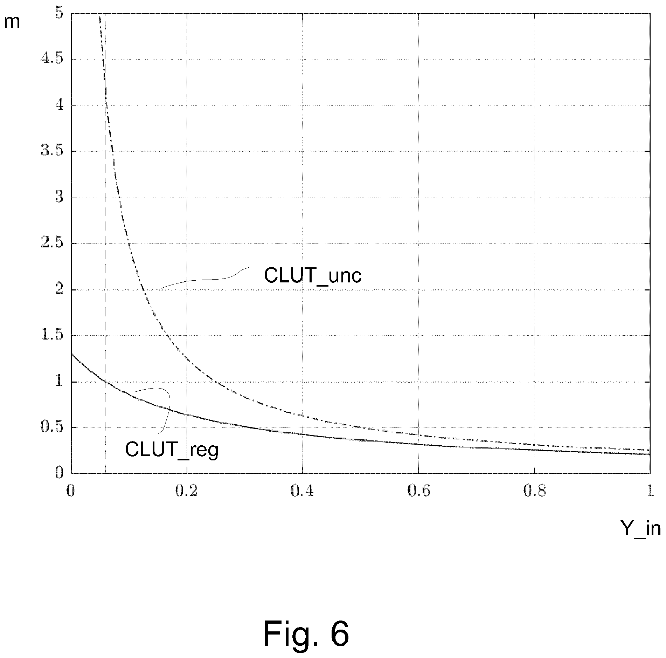

**Fig. 6** gives an example of a continuous chroma multiplier C-LUT content for a particular setting of SDR input and D=0.1907 (and a CR=4 for a LUT definition where the maximum value of the C-LUT can go up to 32 if CR were equal to 1). The dashed curve gives the original uncorrected C-LUT if the present invention would not be applied. As can be seen it can grow inconveniently high, e.g. for an input luma equal to m13 for Rec. 2020 blue (shown by the vertical dashed line). When using an offset value D= 0.25-m13 the C-LUT CLUT_reg is obtained, which is technically better behaved, and a system as explained above can be constructed with no or little chroma clipping.

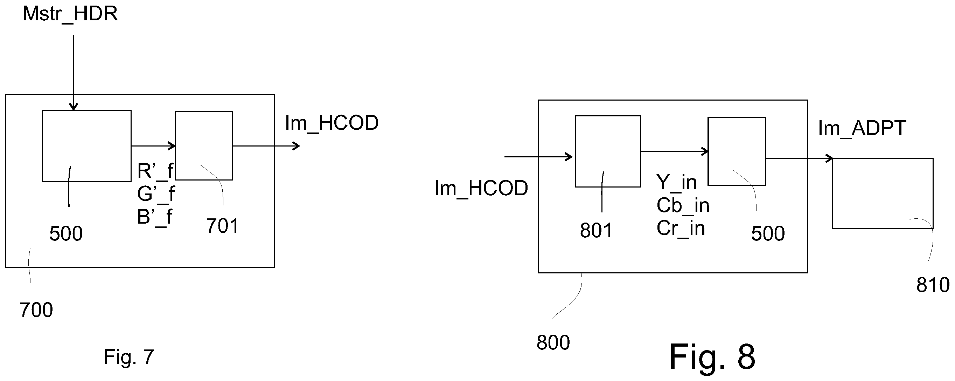

**Fig. 7** shows an encoder for encoding input images (typically master graded HDR images) as output images, e.g. proxy images coding the HDR images for communication, which comprises the pixel color processing circuit (500) according to any of its taught embodiments, which is used in the encoder for processing pixel colors of the master graded HDR video to obtain final red, green and blue color components (R'_f, G'_f, B'_f). This circuit can apply any of the dynamic range changes the user of the technology may desire, e.g. a mapping function may be elected to have the shape of the HLG OETF, etc.

The skilled person can understand that the technology of the formatter (701) for formatting the final red, green and blue color components into image coding data of an encoded HDR image (Im_HCOD) for storage or communication may also take various forms, e.g. use different color spaces, different codings (e.g. using different EOTFs for defining the lumas), etc.

**Fig. 8** shows a high dynamic range image decoder (800) comprising an input for receiving an encoded HDR image (Im_HCOD), e.g. the coding of the format generated by the above encoder, or some other HDR or SDR image format.

It comprises a color converter (801) to transform (or copy) whatever pixel color definition is in the encoded HDR image (Im HCOD) to a set of YCbCr codings of pixel colors as described in the Figs. 4 and 5 (e.g. PQ YCbCr colors, or Rec. 709 YCbCr pixel colors as input for the pixel color processing circuit 500). The pixel color processing circuit (500) in a decoding apparatus is typically used or activated to calculate an adapted HDR image (Im_ADPT), e.g. of lesser dynamic range than the input image. We elucidate how the adapted HDR image (Im_ADPT) may be sent to a display 810 for display (e.g. over HDMI if the decoder resides in a set-top-box or computer and the display is external; or over an internal bus to the display panel if the decoder resides in a television display or a mobile phone or the like). However, another apparatus embodiment may send the output images comprising the calculated pixel colors to e.g. a hard disk of a content delivery network etc.

**Fig. 9** shows one preferred embodiment, wherein the input lumas Y_in_PQ (of the input image) come in as a PQ luma (i.e. e.g. in 10 bit 1023 representing 10,000 nit). The calculation is performed in (stays in) the PQ domain, ergo the output of luma mapping circuit (302) will be a PQ output luma Y_out_PQ. The brightness-scaled red, green and blue components R'_a_PQ, G'_a_PQ, and B'_a_PQ will typically also be in the luma domain (the final red, green and blue components may also be in the PQ domain, but not necessarily). Note the concave shape of the luma mapping curve, because we will typically be in a down-grading application in this domain (when inputing Rec. 709 image colors we will up-grade SDR to HDR, so the curve will have an inverted i.e. convex shape), although not necessarily, since we may also be up-grading in the PQ domain, to higher maximum luminance output.

The algorithmic components disclosed in this text may (entirely, or in part) be realized in practice as hardware (e.g. parts of an application specific integrated circuit) or as software running on a special digital signal processor, or a generic processor, etc. At least some of the elements of the various embodiments may be running on a fixed or configurable CPU, GPU, Digital Signal Processor, FPGA, Neural Processing Unit, Application Specific Integrated Circuit, microcontroller, SoC, etc. E.g. complex operations which determine an optimal shape of a mapping function may be performed in firmware, whereas the pixel processing pipeline, which does elementary operations on each and every pixel, e.g. mapping a luminance of that pixel to a resultant luminance for output, may be done in a hardware circuit. Some of the processing may happen on disjunct systems, e.g. as a cloud service. The images may be temporarily or for long term stored in various memories, in the vicinity of the processor(s) or remotely accessible e.g. over the internet. Other memories may contain one or more instructions for configuring or reconfiguring parts of the computations or the processing elements of a processing chain.

It should be understandable to the skilled person from our presentation which components may be optional improvements and can be realized in combination with other components, and how (optional) steps of methods correspond to respective means of apparatuses, and vice versa. Some combinations will be taught by splitting the general teachings to partial teachings regarding one or more of the parts. The word "apparatus" in this application is used in its broadest sense, namely a group of means allowing the realization of a particular objective, and can hence e.g. be (a small circuit part of) an IC, or a dedicated appliance (such as an appliance with a display), or part of a networked system, etc. "Arrangement" is also intended to be used in the broadest sense, so it may comprise inter alia a single apparatus, a part of an apparatus, a collection of (parts of) cooperating apparatuses, etc. Some apparatuses may be connected to displays or contain displays.

The computer program product denotation should be understood to encompass any physical realization of a collection of commands enabling a generic or special purpose processor, after a series of loading steps (which may include intermediate conversion steps, such as translation to an intermediate language, and a final processor language) to enter the commands into the processor, and to execute any of the characteristic functions of an invention. In particular, the computer program product may be realized as data on a carrier such as e.g. a disk, data present in a memory, data travelling via a network connection -wired or wireless. Apart from program code, characteristic data required for the program, such as e.g. control data, may also be embodied as a computer program product. Some of the technologies may be encompassed in signals, typically control signals for controlling one or more technical behaviors of e.g. a receiving apparatus, such as a television. Some circuits may be reconfigurable, and temporarily configured for particular processing by software. Some parts of the apparatuses may be specifically adapted to receive, parse and/or understand innovative signals.

Some of the steps required for the operation of the method may be already present in the functionality of the processor instead of described in the computer program product, such as data input and output steps.

It should be noted that the above-mentioned embodiments illustrate rather than limit the invention. Where the skilled person can easily realize a mapping of the presented examples to other variants, we have for conciseness not mentioned all these options in-depth. Apart from combinations of elements of the invention as combined in the claims, other combinations of the elements are possible. Any combination of elements can in practice be realized in a single dedicated element, or split elements.

Any reference sign between parentheses in the claim is not intended for limiting the claim. The word "comprising" does not exclude the presence of elements or aspects not listed in a claim. In several situations the word "portion" of a set of elements is not intended to exclude that portion may also cover the totality of the elements, because that may function equally in a same manner. The word "a" or "an" preceding an element does not exclude the presence of a plurality of such elements, nor the presence of other elements. "And/or" means that both options may be present together, or one of them may be present alone. The word "e.g." is typically used to indicate that we mean that something else is also belonging to the possibilities, e.g. a similar element, example, or teaching. "i.a." means inter alia, or among others. An element between ellipses "0" will normally be used to indicate that something is optional, i.e. at the same time saying the further aspect is also possible as a variant of a more general concept behind the ellipses, rather than necessary, e.g. (local) luminance boosting is intended to say, (primarily, as main level teaching) "luminance boosting" in general, which may be for all pixels the same, but may also be different, i.e. of the "local luminance boosting" variant, e.g. only applied to some locality of the image.

## Claims

1.  A pixel color processing circuit (500) arranged to receive an input luma (Y_in) and an input blue chroma (Cb_in) and input red chroma (Cr_in), and comprising a luma mapping circuit (302) arranged to receive a luma mapping function (F_Ymap) to transform the input luma into a non-linear output luminance (L'_out), or output luma, and comprising a multiplier establishment circuit (305) arranged to establish a multiplier (m) for the input luma which depends on the input luma (Y_in), and a first multiplication circuit arranged to multiply the input blue and red chroma by the multiplier to obtain normalized chroma components (Cb_m, Cr_m), and a clipper (401) to obtain clipped chroma components falling within a range delimited by a negative clipping constant (CLCL) and a positive clipping constant (CLCU), and a matrix calculation circuit (404) arranged to transform the normalized chroma components and a normalized luma into normalized red, green and blue components (R'_n, G'_n, B'_n), and a second multiplication circuit (402) to multiply the non-linear output luminance (L'_out), or output luma, by the normalized red, green and blue components (R'_n, G'_n, B'_n) to obtain scaled red, green and blue components (R'_a, G'_a, B'_a);

    wherein the luma mapping circuit (302) derives a secondary luma mapping function (F_YmapC) to apply to the input luma based on the luma mapping function by applying a first calculation which equals:

    $$F\_YmapC(Y\_in)=(F\_Ymap(Y\_in)+D)/(1+D),$$

    wherein D is an offset value which is constant for the processing of at least one image;
    wherein the multiplier establishment circuit (305) establishes the multiplier as a multiplication of a first multiplier component which depends on the input luma by a second multiplier component which equals a reciprocal of a value which equals the sum of an output of the luma mapping function when having the input luma as input and the offset value (D);
    and wherein the pixel color processing circuit comprises a final calculation circuit (403) which performs a transformation of the scaled red, green and blue components (R'_a, G'_a, B'_a) into final red, green and blue components (R'_f, G'_f, B'_f) which depends on a second calculation which equals: calculating a first result by subtracting from a respective one of the scaled red, green and blue color components a value which equals: the offset value divided by one plus the offset value;

calculating a second result being a maximum of zero and the first result; and

multiplying this second result by one plus the offset value.

2. The pixel color processing circuit as claimed in claim 1, wherein the offset value (D_opt) is set as a constant (CO) minus the value of a coefficient (m13) of a RGB-to-YCbCr conversion matrix which specifies a contribution of an amount of blue primary to a pixel color luma.

3. The pixel color processing circuit as claimed in claim 2 wherein the constant is equal to 1.0.

4. The pixel color processing circuit as claimed in claim 1, wherein the offset value is determined as an integer D_dis which is calculated based on a first integer P and a second integer IN, wherein the integer P is calculated to be the smallest one of a first number of bits of a LUT for luma processing and a second number of bits of a LUT of the final calculation circuit (403), and wherein the second integer IN is chosen so that min(D_dis-D) is a positive number and as close as possible to zero, wherein D is a real-valued calculated offset value.

5. The pixel color processing circuit as claimed in claim 1, wherein the offset value is determined based on a maximum luminance of an input image comprising the input luma.

6. A high dynamic range image encoder (700) comprising an input for receiving a master graded HDR image (Mstr_HDR), and comprising the pixel color processing circuit (500) as claimed in one of the above claims for processing pixel colors of the master graded HDR video to obtain final red, green and blue color components (R'_f, G'_f, B'_f), and a formatter (701) for formatting the final red, green and blue color components into image coding data of an encoded HDR image (Im_HCOD) for storage or communication.

7. A high dynamic range image decoder (800) comprising an input for receiving an encoded HDR image (Im_HCOD), and a color converter (801) to yield a set of YCbCr codings of pixel colors of the encoded HDR image to be sent to the pixel color processing circuit (500) as claimed in one of the claims 1 to 5, wherein this pixel color processing circuit (500) is arranged to calculate an adapted HDR image (Im_ADPT) for further communication, storage, or display.

8. A method of pixel color processing comprising: receiving an input luma (Y_in) and an input blue chroma (Cb_in) and input red chroma (Cr_in), and luma mapping using a luma mapping function (F_Ymap) the input luma into a non-linear output luminance (L'_out), or output luma;

establishing a multiplier (m) for the input luma which depends on the input luma (Y_in), and multiplying the input blue and red chroma by the multiplier to obtain normalized chroma components (Cb_m, Cr_m), and clipping the normalized chroma components to a range delimited by a negative clipping constant (CLCL) and a positive clipping constant (CLCU) to obtain clipped chroma components (Cb_cL, Cr_cL);

transforming the clipped chroma components and a luma component which is equal to 1.0 into normalized red, green and blue components (R'_n, G'_n, B'_n) by using a color conversion matrix;

multiplying the non-linear output luminance (L'_out), or output luma, by the normalized red, green and blue components (R'_n, G'_n, B'_n) to obtain scaled red, green and blue components (R'_a, G'_a, B'_a);

wherein the luma mapping applies to the input luma a secondary luma mapping function (FYmapC) which is based on the luma mapping function by applying a first calculation which equals:

$$F\_YmapC(Y\_in)=(F\_Ymap(Y\_in)+D)/(1+D),$$

wherein D is an offset value which is constant for the processing of at least one image;

wherein the multiplier is established as a multiplication of a first multiplier component which depends on the input luma by a second multiplier component which equals a reciprocal of a value which equals the sum of an output of the luma mapping function when having the input luma as input and the offset value (D);

performing a transformation of the scaled red, green and blue components (R'_a, G'_a, B'_a) into final red, green and blue components (R'_f, G'_f, B'_f) which depends on a second calculation which equals: calculating a first result by subtracting from a respective one of the scaled red, green and blue color components a value which equals: the offset value divided by one plus the offset value;

calculating a second result being a maximum of zero and the first result; and

multiplying this second result by one plus the offset value.

9. The method as claimed in claim 8 wherein the offset value (D_opt) is set as a constant (CO) minus the value of a coefficient (m13) of a RGB-to-YCbCr conversion matrix which specifies a contribution of an amount of blue primary to a pixel color luma.

10. The method as claimed in claim 9 wherein the constant (CO) is equal to 1.0.

11. The method as claimed in claim 8 wherein the offset value is determined as an integer D_dis which is calculated based on a first integer P and a second integer IN, wherein the integer P is calculated to be the smallest one of a first number of bits of a LUT for luma processing and a second number of bits of a LUT of the final calculation circuit (403), and wherein the second integer IN is chosen so that min(D_dis-D) is a positive number and as close as possible to zero, wherein D is a real-valued calculated offset value.

12. The method as claimed in claim 8 wherein the offset value is determined based on a maximum luminance of an input image comprising the input luma.

Fig. 1 A

Fig. 1B

Fig. 1D

Fig. 1C

Fig. 1

Fig. 2

EP 4 636 683 A1

Fig. 3A

Fig. 3B

Fig. 3C

Fig. 3

Fig. 4

EP 4 636 683 A1

Fig. 5

EP 4 636 683 A1

Fig. 6

Mstr_HDR

Im_HCOD

R'_f
G'_f
B'_f

500          701

700

Fig. 7

Im_HCOD

Y_in
Cb_in
Cr_in

Im_ADPT

801          500

800

810

Fig. 8

EP 4 636 683 A1

Fig. 9

EP 4 636 683 A1

Europäisches
Patentamt

European
Patent Office

Office européen
des brevets

# EUROPEAN SEARCH REPORT

**Application Number**

EP 24 17 0714

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 873 096 A1 (KONINKLIJKE PHILIPS NV [NL]) 1 September 2021 (2021-09-01) | 7 | INV.<br>G06T5/90 |
| A | * paragraphs [0019] - [0078] * | 1-6,8-12 | H04N9/68 |
| | ----- | | |
| X | US 2021/360266 A1 (VAN DER VLEUTEN RENATUS JOSEPHUS [NL] ET AL) 18 November 2021 (2021-11-18) | 7 | |
| A | * paragraphs [0032] - [0065], [0233] - [0274]; figures 3,4, 15 * | 1-6,8-12 | |
| | ----- | | |
| A | DAI MIN (MAGGIE) ET AL: "An overview of end-to-end HDR", PROCEEDINGS OF SPIE; [PROCEEDINGS OF SPIE ISSN 0277-786X VOLUME 10524], SPIE, US, vol. 10752, 17 September 2018 (2018-09-17), pages 107520Z-107520Z, XP060110666, DOI: 10.1117/12.2322600 ISBN: 978-1-5106-1533-5 * the whole document * | 1-12 | |
| | ----- | | |

TECHNICAL FIELDS
SEARCHED (IPC)

H04N
G06T

The present search report has been drawn up for all claims

| Place of search | Date of completion of the search | Examiner |
|---|---|---|
| The Hague | 26 September 2024 | Hardell, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 24 17 0714

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2024

| Patent document cited in search report | Publication date | Patent family member(s) | Publication date |
|---|---|---|---|
| EP 3873096 A1 | 01-09-2021 | CN 115176469 A | 11-10-2022 |
| | | DE 102021104214 A1 | 26-08-2021 |
| | | EP 3873096 A1 | 01-09-2021 |
| | | EP 4111689 A1 | 04-01-2023 |
| | | JP 7300070 B2 | 28-06-2023 |
| | | JP 2023504311 A | 02-02-2023 |
| | | KR 20220143932 A | 25-10-2022 |
| | | US 2021266509 A1 | 26-08-2021 |
| | | WO 2021170425 A1 | 02-09-2021 |
| US 2021360266 A1 | 18-11-2021 | BR 112021002187 A2 | 04-05-2021 |
| | | CA 3111150 A1 | 12-03-2020 |
| | | CN 112640471 A | 09-04-2021 |
| | | CO 2021002964 A2 | 10-05-2021 |
| | | DE 112019004456 T5 | 02-06-2021 |
| | | EP 3847819 A1 | 14-07-2021 |
| | | JP 7453214 B2 | 19-03-2024 |
| | | JP 2021536701 A | 27-12-2021 |
| | | KR 20210055686 A | 17-05-2021 |
| | | SG 11202100329V A | 25-02-2021 |
| | | US 2021360266 A1 | 18-11-2021 |
| | | WO 2020048790 A1 | 12-03-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017108906 A